# EUROPEAN PATENT SPECIFICATION

(11) **EP 4 589 525 B1**
(45) Date of publication and mention of the grant of the patent: **21.10.2026**
(21) Application number: 23954955.3
(22) Date of filing: 27.11.2023
(51) Int. Cl.: G06T 7/00

(54) **BATTERY MODULE VERIFICATION METHOD AND APPARATUS**
VERFAHREN UND VORRICHTUNG ZUR BATTERIEMODULÜBERPRÜFUNG
PROCÉDÉ ET APPAREIL DE VÉRIFICATION DE MODULE DE BATTERIE

(30) Priority: 11.10.2023 CN 202311310078
(43) Date of publication of application: 23.07.2025
(73) Proprietor: Contemporary Amperex Technology (Hong Kong) Limited, Central (HK)
(72) Inventor: QIU, Shiping, Ningde, Fujian 352100 (CN); LIU, Yang, Ningde, Fujian 352100 (CN); ZHAO, Bin, Ningde, Fujian 352100 (CN); YU, Dingshan, Ningde, Fujian 352100 (CN)
(74) Representative: Kraus & Lederer PartGmbB
(86) International application number: PCT/CN2023/134403
(87) International publication number: WO 2025/076936

(56) References cited:
- EP-A1- 3 683 572
- WO-A1-2023/146350
- CN-A- 113 222 900
- CN-A- 115 526 881
- CN-A- 117 058 138
- CN-B- 108 037 130
- CN-U- 207 723 694
- US-A1- 2023 238 820

## Description

### TECHNICAL FIELD

This disclosure relates to but is not limited to the field of battery production technologies, and in particular, relates to a check method and device for a battery module.

### BACKGROUND

New energy batteries are increasingly widely used in life and industry. For example, new energy vehicles equipped with batteries have been widely used. In addition, batteries are increasingly used in the field of energy storage and the like.

In the related technology, if a battery module is faulty during assembly of the battery module, it is generally necessary to shut down the machine for manual discharge, which incurs high handling costs and low handling efficiency. This affects productivity of a line, and cannot meet production requirements of high timeliness and high efficiency. For example, EP 3 683 572 A1 discloses a battery detection method and a battery detection device. WO 2023/146350 A1 discloses a method for inspecting a battery module.

### SUMMARY

Embodiments of this disclosure provide a check method and device for a battery module. The invention is defined by the appended claims.

Technical solutions of embodiments of this disclosure are implemented as follows.

An embodiment of this disclosure provides a check method for a battery module, applied to a control apparatus. The check method includes:
controlling a vision capture mechanism to obtain an image of the battery module on a tray;
determining a check result of the battery module based on the image of the battery module, where the check result indicates whether the battery module has a defect, and the defect includes an end plate of the battery module is improperly assembled; and
in a case that the check result indicates that the battery module has a defect, controlling a discharge apparatus to move the battery module into a carrier apparatus. The image of the battery module includes a second image of a target end plate of the battery module. Determining a check result of the battery module based on the image of the battery module includes determining a second check result of the target end plate based on the second image of the target end plate, and determining the check result of the battery module based on the second check result of the target end plate. Determining a second check result of the target end plate based on the second image of the target end plate includes: recognizing the second image of the target end plate, to obtain information about the target end plate; and checking the information about the target end plate, to obtain the second check result of the target end plate

In some implementations, the defect comprises a faulty battery cell is present in the battery module and the image of the battery module includes a first image of a target battery cell in the battery module. The determining a check result of the battery module based on the image of the battery module includes: determining a first check result of the target battery cell based on the first image of the target battery cell, and determining the check result of the battery module based on the first check result of the target battery cell.

In the implementations of this disclosure, the check result of the battery module is determined based on the first check result of the target battery cell and/or the second check result of the target end plate, so that both accuracy of the check result and comprehensiveness of the check result are improved, thereby improving quality and stability of an assembled battery pack.

In some implementations, the determining a first check result of the target battery cell based on the first image of the target battery cell includes: recognizing the first image of the target battery cell, to obtain information about the target battery cell; and checking the information about the target battery cell, to obtain the first check result of the target battery cell.

In the implementations of this disclosure, the information about the target battery cell is obtained through image recognition, so that accuracy of the information is improved, thereby improving accuracy of the check result. In addition, the target battery cell is automatically checked, which improves check accuracy and check efficiency compared with a manual check.

In some implementations, the determining the check result of the battery module based on the first check result of the target battery cell includes: in a case that the first check result of the target battery cell indicates that a defect is present, using the first check result as the check result of the battery module; and/or in a case that the first check result of the target battery cell indicates that no defect is present and the target battery cell meets a preset condition, controlling the vision capture mechanism to capture a first image of a next target battery cell, determining a first check result of the next target battery cell based on the first image of the next target battery cell, and determining the check result of the battery module based on the first check result of the next target battery cell; and/or in a case that the first check result of the target battery cell indicates that no defect is present and the target battery cell does not meet the preset condition, controlling the vision capture mechanism to capture the second image of the target end plate, determining the second check result of the target end plate based on the second image of the target end plate, and determining the check result of the battery module based on the second check result of the target end plate.

In the implementations of this disclosure, the check result of the battery module is determined based on the first check result indicating that a defect is present, the first check result of the next target battery cell, or the second check result of the target end plate, so that accuracy and comprehensiveness of the check result are improved, thereby improving quality and stability of an assembled battery pack.

In the implementations of this disclosure, the information about the target end plate is obtained through image recognition, so that accuracy of the information is improved, thereby improving accuracy of the check result. In addition, the target end plate is automatically checked, which improves check accuracy and check efficiency compared with a manual check.

In some implementations, the determining the check result of the battery module based on the second check result of the target end plate includes: in a case that the second check result of the target end plate indicates that the target end plate has a defect, using the second check result of the target end plate as the check result of the battery module; and/or in a case that the second check result of the target end plate indicates that the target end plate has no defect, controlling the vision capture mechanism to capture the first image of the target battery cell, determining the first check result of the target battery cell based on the first image of the target battery cell, and determining the check result of the battery module based on the first check result of the target battery cell.

In the implementations of this disclosure, the check result of the battery module is determined based on the second check result indicating that a defect is present or the first check result of the target battery cell, so that accuracy and comprehensiveness of the check result are improved, thereby improving quality and stability of an assembled battery pack.

In some implementations, in a case that the image of the battery module includes a first image of a target battery cell in the battery module, the controlling a vision capture mechanism to capture an image of the battery module on a tray includes: controlling the vision capture mechanism to move from a current position to a position corresponding to the target battery cell; and sending a first obtaining instruction to the vision capture mechanism, to enable the vision capture mechanism to capture the first image of the target battery cell based on the first obtaining instruction.

In the implementations of this disclosure, firstly, the vision capture mechanism is controlled to move to a position corresponding to a target battery cell to obtain an image of the target battery cell, so that accuracy of the image is improved. Secondly, the vision capture mechanism captures an image based on an obtaining instruction, which reduces times of capture and hardware consumption compared with real-time capture. Finally, the vision capture mechanism moves to obtain images of target battery cells in different positions, which reduces hardware costs and system complexity compared with deploying a vision capture mechanism in each position.

In some implementations, in a case that the image of the battery module includes a second image of a target end plate of the battery module, the controlling a vision capture mechanism to capture an image of the battery module on a tray includes: controlling the vision capture mechanism to move from a current position to a preset position; and sending a second obtaining instruction to the vision capture mechanism, to enable the vision capture mechanism to capture the second image of the target end plate based on the second obtaining instruction.

In the implementations of this disclosure, the vision capture mechanism is controlled to move to a position corresponding to a target end plate to obtain an image of the target end plate, so that accuracy of the image is improved. In addition, the vision capture mechanism captures an image based on an obtaining instruction, which reduces times of capture and hardware consumption compared with real-time capture.

In some implementations, the method further includes: obtaining information about the battery module; and adjusting a working parameter of the vision capture mechanism based on the information about the battery module.

In the implementations of this disclosure, information about two battery modules is compared, to quickly determine whether a type of a battery module needs to be switched. In addition, the working parameter of the vision capture mechanism is adjusted in time to be compatible with battery modules of different specifications, so that universality and adaptability of a check device are improved, and requirements of highly flexible battery production can be met.

An embodiment of this disclosure further provides a check device for a battery module. The check device includes a vision capture mechanism, a discharge apparatus, and a carrier apparatus.

The vision capture mechanism is configured to capture an image of the battery module on a tray.

The carrier apparatus is configured to store a faulty battery module.

The discharge apparatus is configured to: in a case that a check result of the battery module indicates that the battery module has a defect, move the battery module into the carrier apparatus, where the check result of the battery module is determined based on the image of the battery module, and the defect includes a target end plate of the battery module is improperly assembled. The image of the battery module includes a second image of a target end plate of the battery module. The determining a check result of the battery module based on the image of the battery module includes determining a second check result of the target end plate based on the second image of the target end plate, and determining the check result of the battery module based on the second check result of the target end plate. The determining a second check result of the target end plate based on the second image of the target end plate includes: recognizing the second image of the target end plate, to obtain information about the target end plate; and checking the information about the target end plate, to obtain the second check result of the target end plate.

In this embodiment of this disclosure, firstly, the battery module is automatically checked, which reduces check costs and check efficiency compared with a manual check. Secondly, each battery cell and end plate in the battery module are checked, to improve accuracy of the check result of the battery module, so as to improve quality and stability of the battery module, and further improve performance and a yield of a formed battery pack. Thirdly, a faulty battery module is automatically discharged, which reduces labor costs and shortens handling duration compared with manual discharge, so that productivity of a line is ensured, and production requirements of high timeliness and high efficiency can be met. Finally, the faulty battery module is stored by using the carrier apparatus, so that automatic running of a system is implemented, and a possibility of a shutdown in a case that a battery module has a defect is reduced.

In some implementations, the vision capture mechanism includes a variable-distance mechanism and a capture apparatus located on the variable-distance mechanism, and a quantity of shafts of the variable-distance mechanism matches a quantity of cameras in the capture apparatus.

In the implementations of this disclosure, the capture apparatus is installed on a shaft of the variable-distance mechanism to implement movement of the capture apparatus, to obtain images of target end plates and target battery cells in different positions. This improves flexibility of the capture apparatus and reduces hardware costs and system complexity compared with fastening a capture apparatus in each position.

In some implementations, the image of the battery module includes a first image of a target battery cell in the battery module. The vision capture mechanism is further configured to: capture the first image of the target battery cell; and send the first image of the target battery cell to a preset control apparatus, so that the control apparatus determines the check result of the battery module based on the first image of the target battery cell.

In the implementations of this disclosure, the battery module is automatically checked based on the image of the target battery cell. This improves check accuracy and check efficiency compared with a manual check.

In some implementations, the image of the battery module includes a second image of the target end plate of the battery module. The vision capture mechanism is further configured to: capture the second image of the target end plate; and send the second image of the target end plate to a preset control apparatus, so that the control apparatus determines the check result of the battery module based on the second image of the target end plate.

In the implementations of this disclosure, the battery module is automatically checked based on the image of the target end plate. This improves check accuracy and check efficiency compared with a manual check.

In some implementations, the check device further includes a conveyance apparatus. The conveyance apparatus is configured to convey the battery module to a first specified position, where a direction in which the conveyance apparatus conveys the battery module is the same as a direction of the discharge apparatus, and the direction in which the conveyance apparatus conveys the battery module crosses a direction of the carrier apparatus.

In the implementations of this disclosure, a position of the carrier apparatus avoids a battery module conveyed by the conveyance apparatus. This helps the conveyance apparatus convey the battery module smoothly. In addition, directions of the discharge apparatus and the conveyance apparatus are the same, to facilitate quick and accurate discharge of a faulty battery module.

In the implementations of this disclosure, the variable-distance mechanism moves based on the target battery cell and the check result of the target battery cell, so that accuracy of movement of the variable-distance mechanism is improved. In addition, the capture apparatus is moved to obtain images of objects in different positions, which reduces hardware costs and system complexity compared with deploying a capture apparatus in each position.

In embodiments of this disclosure, a vision capture mechanism is controlled to capture an image of a battery module on a tray; a check result of the battery module is determined based on the image of the battery module, where the check result indicates whether the battery module has a defect, and the defect includes at least one of the following: a faulty battery cell is present in the battery module, or an end plate of the battery module is improperly assembled; and in a case that the check result indicates that the battery module has a defect, a discharge apparatus is controlled to move the battery module into a carrier apparatus. In this way, firstly, the battery module is automatically checked, which reduces check costs and check efficiency compared with a manual check. Secondly, each battery cell and end plate in the battery module are checked, to improve accuracy of the check result of the battery module, so as to improve quality and stability of the battery module, and further improve performance and a yield of a formed battery pack. Finally, a faulty battery module is automatically discharged, which reduces labor costs and shortens handling duration compared with manual discharge, so that productivity of a line is ensured, and production requirements of high timeliness and high efficiency can be met.

It should be understood that the foregoing general descriptions and the following detailed descriptions are merely examples for explanation, and are not intended to limit this disclosure.

### BRIEF DESCRIPTION OF DRAWINGS

The accompanying drawings herein are incorporated into the specification and constitute a part of the specification, show embodiments conforming to this disclosure, and are used together with the specification to describe the technical solutions of this disclosure.
FIG. 1 is a schematic diagram 1 of an implementation procedure of a check method for a battery module according to an embodiment of this disclosure;
FIG. 2 is a schematic diagram 2 of an implementation procedure of a check method for a battery module according to an embodiment of this disclosure;
FIG. 3 is a schematic diagram 1 of a composition structure of a check device for a battery module according to an embodiment of this disclosure;
FIG. 4 is a schematic diagram 2 of a composition structure of a check device for a battery module according to an embodiment of this disclosure;
FIG. 5 is a schematic diagram 3 of a composition structure of a check device for a battery module according to an embodiment of this disclosure;
FIG. 6 is a schematic diagram 3 of an implementation procedure of a check method for a battery module according to an embodiment of this disclosure; and
FIG. 7 is a schematic diagram 4 of an implementation procedure of a check method for a battery module according to an embodiment of this disclosure.

### DESCRIPTION OF EMBODIMENTS

To make the objectives, technical solutions, and advantages of this disclosure clearer, the following further describes this disclosure in detail with reference to the accompanying drawings. The described embodiments shall not be regarded as limitations on this disclosure. All other embodiments obtained by a person of ordinary skill in the art without creative efforts shall fall within the protection scope of this disclosure.

The following descriptions relate to "some embodiments", which describe subsets of all possible embodiments, but it may be understood that "some embodiments" may be same or different subsets of all the possible embodiments and may be combined with each other without conflict.

In the following descriptions, the terms "first\second\third" are merely used to distinguish between similar objects, and do not represent a specific order of objects. It may be understood that specific orders or sequences of "first\second\third" may be interchanged when allowed, so that embodiments of this disclosure described herein can be implemented in an order other than those shown or described herein.

Unless otherwise defined, all technical and scientific terms used in the specification have same meanings as those usually understood by a person skilled in the art of this disclosure. The terms used in the specification are merely intended to describe embodiments of this disclosure, and are not intended to limit this disclosure.

Currently, new energy batteries are increasingly widely used in life and industry. The new energy batteries are used in energy storage power supply systems such as hydropower, thermal power, wind power, and solar power stations, and are widely used in electric transportation tools such as electric bicycles, electric motorcycles, and electric vehicles, aerospace, and other fields. With continuous expansion of application fields of power batteries, market demands for the power batteries are also increasing.

In embodiments of this disclosure, a battery may be a battery cell. The battery cell is a basic unit that can implement mutual conversion between chemical energy and electric energy, and can be used to make a battery module or a battery pack, so as to supply power to an electric apparatus. The battery cell may be a secondary battery, and the secondary battery is a battery cell that can be continuously used by activating an active material through charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in embodiments of this disclosure.

The battery cell typically includes an electrode assembly. The electrode assembly includes a positive electrode, a negative electrode, and a separator. During charging and discharging of the battery cell, active ions (for example, lithium ions) are inserted into and removed from the positive electrode and the negative electrode back and forth. The separator is disposed between the positive electrode and the negative electrode, to prevent a short circuit between the positive electrode and negative electrode and allow the active ions to pass through.

In some embodiments, the battery cell further includes an electrolyte, and the electrolyte can conduct ions between the positive electrode and the negative electrode. A type of the electrolyte is not specifically limited in this disclosure, and can be selected according to a requirement. The electrolyte may be in a liquid, gel, or solid form.

In some embodiments, the battery cell may include a housing. The housing is configured to package components such as the electrode assembly and the electrolyte. The housing may be a steel housing, an aluminum housing, a plastic housing (for example, polypropylene), a composite metal housing (for example, a copper-aluminum composite housing), an aluminum-plastic film, or the like.

In an example, the battery cell may be a cylindrical battery cell, a prismatic battery cell, a soft-pack battery cell, or a battery cell of another shape. The prismatic battery cell includes a square-shell battery cell, a blade battery cell, and a polygonal battery, such as a hexagonal battery. This is not particularly limited in this disclosure.

In some embodiments, the housing includes a cover and a shell, the shell is provided with an opening, and the cover closes the opening to form a closed space for accommodating substances such as the electrode assembly and the electrolyte. The shell may be provided with one or more openings. One or more covers may be disposed.

In some embodiments, at least one electrode terminal is disposed on the housing, and the electrode terminal is electrically connected to a tab. The electrode terminal may be directly connected to the tab or indirectly connected to the tab through an adapter component. The electrode terminal may be disposed on the cover, or may be disposed on the shell.

In some embodiments, a pressure relief mechanism is disposed on the housing. The pressure relief mechanism is configured to relieve internal pressure of the battery cell.

In embodiments of this disclosure, a battery may alternatively be a single physical module including one or more battery cells to provide a higher voltage and capacity. When there are a plurality of battery cells, the plurality of battery cells are connected in series, parallel, or a combination of both through a busbar component.

In the related technology, power batteries are widely used in energy storage power supply systems, electric transportation tools, military equipment, aerospace, and other fields. The power battery may be a battery cell, or may be a battery module or a battery pack. The battery module includes a plurality of battery cells, the battery pack includes a plurality of battery modules, and each battery module needs to be put into a box according to a specified order. If the battery module is faulty during assembly of the battery module, it is generally necessary to shut down the machine for manual discharge, which incurs high handling costs and low handling efficiency. This affects productivity of a line, and cannot meet production requirements of high timeliness and high efficiency.

An embodiment of this disclosure provides a check method for a battery module. Firstly, the battery module is automatically checked, which reduces check costs and improves check efficiency compared with a manual check. Secondly, each battery cell and end plate in the battery module are checked, to improve accuracy of a check result of the battery module, so as to improve quality and stability of the battery module, and further improve performance and a yield of a formed battery pack. Thirdly, a faulty battery module is automatically discharged, which reduces labor costs and shortens handling duration compared with manual discharge, so that productivity of a line is ensured, and production requirements of high timeliness and high efficiency can be met. Finally, the faulty battery module is stored by using a carrier apparatus, so that automatic running of a system is implemented, and a possibility of a shutdown in a case that a battery module has a defect is reduced. The method provided in this embodiment of this disclosure may be performed by a check device, a control apparatus, and the like. The check device may be any suitable type of device in any suitable scenario. In some implementations, the check device may include a control apparatus. The control apparatus may be at least one of the following: a programmable logic controller (Programmable Logic Controller, PLC), a single-chip microcomputer, an intermediate computer, or an upper computer. During implementation, the control apparatus may further include a processor and a memory that stores processor-executable instructions, and when the instructions are executed by the processor, the method provided in this embodiment of this disclosure is implemented.

The following clearly and completely describes the technical solutions in embodiments of this disclosure with reference to the accompanying drawings in embodiments of this disclosure.

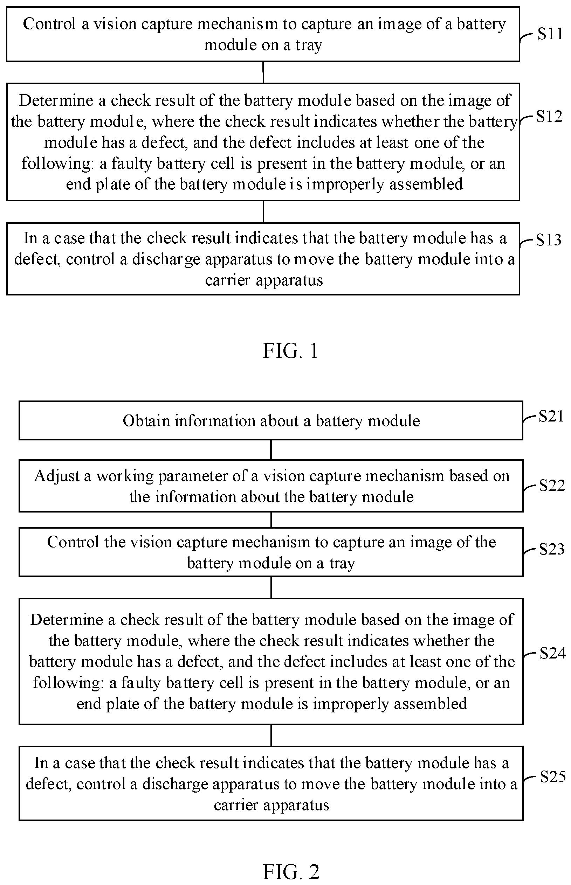

FIG. 1 is a schematic diagram 1 of an implementation procedure of a check method for a battery module according to an embodiment of this disclosure. As shown in FIG. 1, the check method is applied to a control apparatus (for example, a lower computer), and the check method includes step S11 to step S13.

Step S11: Control a vision capture mechanism to capture an image of the battery module on a tray.

Herein, the battery module includes at least one battery cell. During implementation, the tray carries the battery module, and flows to a check device along a flow direction of a transfer line, and the control apparatus is configured to check each battery cell in the battery module and each end plate of the battery module. In some implementations, the tray may be adapted to carry battery cells of different sizes and types.

The vision capture mechanism may be any suitable apparatus that can implement this function, for example, a capture apparatus or a capture apparatus and a variable-distance mechanism. The capture apparatus may be any suitable apparatus that can obtain an image, for example, an image sensor, a camera, or a camera lens. In some implementations, there may be at least one capture apparatus. In some implementations, a quantity of capture apparatuses may be adapted to a quantity of rows of battery cells carried by the tray. For example, the tray carries double rows of battery cells, and in this case, there may be two capture apparatuses. In some implementations, the quantity of capture apparatuses may be adapted to a quantity of shafts of a variable-distance mechanism, and the variable-distance mechanism includes at least two shafts. For example, if the variable-distance mechanism includes two shafts, there may be two capture apparatuses. During implementation, the capture apparatus is located on the variable-distance mechanism, a distance between different capture apparatuses is adjusted by moving two shafts longitudinally, a height of the capture apparatus from a battery cell is adjusted by adjusting a position of the capture apparatus on a shaft, and a capture position is adjusted by moving the shaft transversely, so that the capture apparatus can capture images of battery cells or end plates of the battery module in different positions.

The image of the battery module may include but is not limited to an image of a single battery cell, an image of at least one end plate, or the like. During implementation, a battery cell has an identification code, and information about the battery cell can be obtained by scanning the identification code. The identification code may include but is not limited to a bar code, a quick response code, or the like.

In some implementations, in a case that the image of the battery module includes a first image of a target battery cell in the battery module, step S11 includes step S111 and step S112.

Step S111: Control the vision capture mechanism to move from a current position to a position corresponding to the target battery cell.

Herein, the current position may be an initial position or a position corresponding to a current target battery cell. The initial position may be any suitable position, for example, a position near a left side of the battery module or a position near a right side of the battery module. During implementation, for a first battery cell, the current position is an initial position, and in this case, a first movement instruction may be sent to the vision capture mechanism, to enable the vision capture mechanism to move from the initial position to a position corresponding to the first battery cell based on the first movement instruction. For a non-first battery cell, the current position is a position corresponding to a current target battery cell, and in this case, a second movement instruction may be sent to the vision capture mechanism, to enable the vision capture mechanism to move from the current position to a position corresponding to a target battery cell based on the second movement instruction. A movement instruction (including the first movement instruction, the second movement instruction, and another subsequent movement instruction) may be any suitable instruction. During implementation, the movement instruction may include a movement distance, and different movement instructions correspond to different movement distances. In some implementations, a movement distance in the first movement instruction may be a distance between the initial position and the first battery cell, and a movement distance in the second movement instruction may be a distance between two battery cells. During implementation, a distance between battery cells of different products may be the same or different.

Step S112: Send a first obtaining instruction to the vision capture mechanism, to enable the vision capture mechanism to capture the first image of the target battery cell based on the first obtaining instruction.

Herein, the first obtaining instruction may be any suitable instruction, and the first obtaining instruction is used to obtain the first image of the battery cell.

In the implementations of this disclosure, firstly, the vision capture mechanism is controlled to move to a position corresponding to a target battery cell to obtain an image of the target battery cell, so that accuracy of the image is improved. Secondly, the vision capture mechanism captures an image based on an obtaining instruction, which reduces times of capture and hardware consumption compared with real-time capture. Finally, the vision capture mechanism moves to obtain images of target battery cells in different positions, which reduces hardware costs and system complexity compared with deploying a vision capture mechanism in each position.

**In** some implementations, in a case that the image of the battery module includes a second image of a target end plate of the battery module, step S11 includes step S113 and step S114.

Step S113: Control the vision capture mechanism to move from a current position to a preset position.

Herein, the current position may include but is not limited to an initial position, a position corresponding to a last target battery cell, or the like. During implementation, the control apparatus may first send a third movement instruction to the vision capture mechanism, to enable the vision capture mechanism to move from the current position to the preset position.

The preset position may be any suitable position in which the second image of the target end plate can be obtained. In some implementations, for different types of battery cells, the preset position may be the same or different.

Step S114: Send a second obtaining instruction to the vision capture mechanism, to enable the vision capture mechanism to capture the second image of the target end plate based on the second obtaining instruction.

Herein, the second obtaining instruction is similar to the first obtaining instruction, and the second obtaining instruction is used to obtain the second image of the target end plate.

**In** the implementations of this disclosure, the vision capture mechanism is controlled to move to a position corresponding to a target end plate to obtain an image of the target end plate, so that accuracy of the image is improved. In addition, the vision capture mechanism captures an image based on an obtaining instruction, which reduces times of capture and hardware consumption compared with real-time capture.

Step S12: Determine a check result of the battery module based on the image of the battery module, where the check result indicates whether the battery module has a defect, and the defect includes at least one of the following: a faulty battery cell is present in the battery module, or an end plate of the battery module is improperly assembled.

Herein, the faulty battery cell may include but is not limited to a defective battery cell, a battery cell of another product, or the like. The defective battery cell may be a battery cell that fails a check in any process before assembly of the battery module, for example, a battery cell with unqualified adhesive application. The improper assembly of the end plate may include but is not limited to reverse assembly, misaligned assembly, incorrect assembly, or the like.

The check result of the battery module may include but is not limited to "pass", "fail", or the like. In some implementations, the check result of the battery module may be determined based on a first check result of each battery cell in the battery module and a second check result of each end plate of the battery module. The first check result of the battery cell may include but is not limited to "pass", "fail", or the like. The second check result of the end plate may include but is not limited to "pass", "fail", or the like. During implementation, the first check result of each battery cell may be first determined, or the second check result of each end plate may be first determined, or the first check result of each battery cell and the second check result of each end plate may be simultaneously determined.

For example, in a case that the first check result of each battery cell is "pass", the second check result of each end plate is determined, and the check result of the battery module is determined based on each second check result. To be specific, in a case that each second check result is "pass", "pass" is used as the check result of the battery module. Conversely, in a case that a specific second check result is "fail", "fail" is used as the check result of the battery module.

For another example, in a case that the second check result of each end plate is "pass", the first check result of each battery cell is determined, and the check result of the battery module is determined based on each first check result. To be specific, in a case that each first check result is "pass", "pass" is used as the check result of the battery module. Conversely, in a case that a certain first check result is "fail", "fail" is used as the check result of the battery module.

In some implementations, if a check result of a certain battery cell or end plate indicates "fail", "fail" may be used as the check result of the battery module, and there is no need to continue to check an unchecked battery cell or end plate. In this way, a data amount is reduced, and handling efficiency is improved.

In some implementations, if a check result of a certain battery cell or end plate indicates "fail", a plurality of checks may be performed. To be specific, an image of the battery cell/end plate is re-obtained for another check. In this way, a misjudgment rate is reduced.

In some implementations, the image of the battery module includes one of the following: a first image of a target battery cell in the battery module, or a second image of a target end plate of the battery module. Step S12 includes step S121 and/or step S122.

Step S121: Determine a first check result of the target battery cell based on the first image of the target battery cell; and determine the check result of the battery module based on the first check result of the target battery cell.

Herein, the first check result may include but is not limited to "pass", "fail", or the like. "Pass" indicates that the target battery cell has no defect, and "fail" indicates that the target battery cell has a defect.

The check result of the battery module may include but is not limited to the first check result, a first check result of a next target battery cell, a second check result of an end plate, or the like. For example, in a case that the first check result indicates that the target battery cell has a defect, the first check result is used as the check result of the battery module. Conversely, in a case that the first check result indicates that the target battery cell has no defect, the first check result of the next target battery cell or the second check result of the end plate is used as the check result of the battery module.

In some implementations, "determine a first check result of the target battery cell based on the first image of the target battery cell" in step S121 includes step S1211 and step S1212.

Step S1211: Recognize the first image of the target battery cell, to obtain information about the target battery cell.

Herein, the information about the target battery cell may include but is not limited to a type, a size, a number, or the like. During implementation, the first image may be recognized by using any suitable neural network, model, or the like, to obtain the information about the target battery cell; or an identification code in the first image may be recognized, to obtain the information about the target battery cell.

Step S1212: Check the information about the target battery cell, to obtain the first check result of the target battery cell.

Herein, a check on the target battery cell may include but is not limited to whether the battery cell is qualified, whether the battery cell is a battery cell of a current product, or the like. In some implementations, the information about the target battery cell may be transferred to a MES (Manufacturing Execution System, manufacturing execution system), and the target battery cell is checked by using the MES, to obtain the first check result. The MES is mainly used to obtain output information of a plurality of devices, and the output information may include but is not limited to output time of a plurality of products output by each device, an identification used to indicate whether the plurality of products are qualified, or the like.

In some implementations, "determine the check result of the battery module based on the first check result of the target battery cell" in step S121 includes at least one of step S1213 to step S1215.

Step S1213: In a case that the first check result of the target battery cell indicates that a defect is present, use the first check result as the check result of the battery module.

Herein, in a case that the first check result of the target battery cell indicates that the target battery cell is not a battery cell of a current product and/or that the target battery cell is an unqualified battery cell, "fail" is used as the check result of the battery module.

Step S1214: In a case that the first check result of the target battery cell indicates that no defect is present and the target battery cell meets a preset condition, control the vision capture mechanism to capture a first image of a next target battery cell; determine a first check result of the next target battery cell based on the first image of the next target battery cell; and determine the check result of the battery module based on the first check result of the next target battery cell.

Herein, the preset condition may be any suitable condition, for example, "not an M^{th} battery cell", or "not a last battery cell", where M is a positive integer and M is a total quantity of battery cells carried by the tray. During implementation, each battery cell may be traversed in sequence. In a case that the first check result of the current battery cell indicates that no defect is present, if the target battery cell is not the last battery cell, the traversal continues, or if the target battery cell is the last battery cell, the traversal stops. To be specific, if the target battery cell is not the last battery cell, a second movement instruction is first sent to the vision capture mechanism, to enable the vision capture mechanism to move to a position corresponding to the next target battery cell, and then a first obtaining instruction is sent to the vision capture mechanism, to enable the vision capture mechanism to capture the first image of the next target battery cell.

During implementation, for "control the vision capture mechanism to capture a first image of a next target battery cell" in step S1214, reference may be made to the specific implementations of step S11. For "determine a first check result of the next target battery cell based on the first image of the next target battery cell; and determine the check result of the battery module based on the first check result of the next target battery cell" in step S1214, reference may be made to the specific implementations of step S121.

Step S1215: In a case that the first check result of the target battery cell indicates that no defect is present and the target battery cell does not meet the preset condition, control the vision capture mechanism to capture the second image of the target end plate; determine a second check result of the target end plate based on the second image of the target end plate; and determine the check result of the battery module based on the second check result of the target end plate.

Herein, the target end plate may be a certain end plate or all end plates at two ends of the battery module. During implementation, for "control the vision capture mechanism to capture the second image of the target end plate" in step S1215, reference may be made to the specific implementations of step S11.

The second check result may include but is not limited to "pass", "fail", or the like. During implementation, in a case that the first check result of the target battery cell indicates that no defect is present and the target battery cell is the last battery cell, the target end plate of the battery module is checked, to obtain the second check result, and the check result of the battery module is obtained based on the second check result. To be specific, in a case that second check results of all the end plates are "pass", "pass" is used as the check result of the battery module. Conversely, in a case that a second check result of a certain end plate is "fail", "fail" is used as the check result of the battery module.

In some implementations, the second check result of the target end plate is obtained by comparing the target end plate with a corresponding standard end plate. To be specific, if the target end plate is different from the corresponding standard end plate, "fail" is used as the second check result of the target end plate, or if the target end plate is substantially the same as the corresponding standard end plate, "pass" is used as the second check result of the target end plate.

The check result of the battery module may include but is not limited to "pass", "fail", or the like. During implementation, in a case that the target end plate includes the end plates at the two ends of the battery module, if the second check result of the target end plate indicates that no defect (to be specific, reverse assembly, misaligned assembly, incorrect assembly, or the like) is present, "pass" is used as the check result of the battery module, or if the second check result of the target end plate indicates that a defect (to be specific, reverse assembly, misaligned assembly, incorrect assembly, or the like) is present, "fail" is used as the check result of the battery module. In a case that the target end plate includes a certain end plate of the battery module, if a second check result of each target end plate indicates that no defect (to be specific, reverse assembly, misaligned assembly, incorrect assembly, or the like) is present, "pass" is used as the check result of the battery module, or if a second check result of a certain target end plate indicates that a defect (to be specific, reverse assembly, misaligned assembly, incorrect assembly, or the like) is present, "fail" is used as the check result of the battery module.

During implementation, if the target battery cell is the last battery cell, a third movement instruction is first sent to the vision capture mechanism, to enable the vision capture mechanism to move to a preset position, and then a second obtaining instruction is sent to the vision capture mechanism, to enable the vision capture mechanism to capture the second image of the target end plate.

Step S122: Determine a second check result of the target end plate based on the second image of the target end plate; and determine the check result of the battery module based on the second check result of the target end plate.

Herein, the second check result of the target end plate may include but is not limited to "pass", "fail", or the like.

In some implementations, "determine a second check result of the target end plate based on the second image of the target end plate" in step S122 includes step S1221 and step S1222.

Step S1221: Recognize the second image of the target end plate, to obtain information about the target end plate.

Herein, the information about the target end plate may include but is not limited to assembly positions of two electrodes of a battery, a size and a type of the end plate, or the like. During implementation, the second image may be recognized by using any suitable neural network, model, or the like, to obtain the information about the target end plate.

Step S1222: Check the information about the target end plate, to obtain the second check result of the target end plate.

Herein, the second check result of the target end plate may be obtained by comparing the target end plate with a corresponding standard end plate. To be specific, if the target end plate is different from the corresponding standard end plate, "fail" is used as the second check result of the target end plate, or if the target end plate is substantially the same as the corresponding standard end plate, "pass" is used as the second check result of the target end plate.

In some implementations, "determine the check result of the battery module based on the second check result of the target end plate" in step S122 includes at least one of step S1223 and step S1224.

Step S1223: In a case that the second check result of the target end plate indicates that the target end plate has a defect, use the second check result of the target end plate as the check result of the battery module.

Herein, if it is indicated that the target end plate has a defect such as reverse assembly, misaligned assembly, or incorrect assembly, "fail" is used as the check result of the battery module.

Step S1224: In a case that the second check result of the target end plate indicates that the target end plate has no defect, control the vision capture mechanism to capture the first image of the target battery cell; determine a first check result of the target battery cell based on the first image of the target battery cell; and determine the check result of the battery module based on the first check result of the target battery cell.

Herein, in a case that each end plate has no defect and each battery cell is unchecked, the check result of the battery module is determined based on a first check result of each battery cell. During implementation, for "control the vision capture mechanism to capture the first image of the target battery cell; determine a first check result of the target battery cell based on the first image of the target battery cell; and determine the check result of the battery module based on the first check result of the target battery cell" in step S1224, reference may be made to the specific implementations of step S1214.

During implementation, in a case that a second check result of each end plate of the battery module indicates that no defect is present, each battery cell in the battery module needs to be checked in sequence. During implementation, a fourth movement instruction is sent to the vision capture mechanism, to enable the vision capture mechanism to move from a preset position to a position corresponding to the target battery cell. The target battery cell may be a first battery cell, and a movement distance in the fourth movement instruction may be a distance between the preset position and the first battery cell.

In some implementations, in a case that each end plate has no defect and a check on each battery cell is completed, "pass" is used as the check result of the battery module.

In the implementations of this disclosure, firstly, the information about the target battery cell/end plate is obtained through image recognition, so that accuracy of the information is improved, thereby improving accuracy of the check result. Secondly, the target battery cell/end plate is automatically checked, which improves check accuracy and check efficiency compared with a manual check. Finally, the check result of the battery module is determined based on the first check result of the target battery cell and/or the second check result of the target end plate, so that accuracy and comprehensiveness of the check result are improved, thereby improving quality and stability of an assembled battery pack.

Step S13: In a case that the check result indicates that the battery module has a defect, control a discharge apparatus to move the battery module into a carrier apparatus.

Herein, the discharge apparatus may be any suitable apparatus that can discharge a battery module. The carrier apparatus may be any suitable apparatus that can carry a battery module, for example, a trolley. During implementation, the carrier apparatus may be in any suitable shape, for example, a roller shape.

In a case that the check result is "fail", the discharge apparatus is controlled to automatically discharge the battery module into the carrier apparatus. In some implementations, the carrier apparatus is connected to the check device in a detachable manner, such as an insertable/removable manner, to facilitate timely removal of the faulty battery module.

In this embodiment of this disclosure, firstly, the battery module is automatically checked, which reduces check costs and check efficiency compared with a manual check. Secondly, each battery cell and end plate in the battery module are checked, to improve accuracy of the check result of the battery module, so as to improve quality and stability of the battery module, and further improve performance and a yield of a formed battery pack. Thirdly, a faulty battery module is automatically discharged, which reduces labor costs and shortens handling duration compared with manual discharge, so that productivity of a line is ensured, and production requirements of high timeliness and high efficiency can be met. Finally, the faulty battery module is stored by using the carrier apparatus, so that automatic running of a system is implemented, and a possibility of a shutdown in a case that a battery module has a defect is reduced.

In some implementations, the check method further includes step S14.

Step S14: In a case that the check result indicates that the battery module has no defect, convey the battery module to a second specified position.

Herein, the second specified position may be any suitable position. During implementation, the second specified position may be a position in a next process (for example, boxing) after assembly of the battery module. In this case, if the battery module has no defect, the battery module is conveyed to a next station, to facilitate detection of a next battery module.

In some implementations, the check method further includes step S15.

Step S15: Control the vision capture mechanism to move to an initial position.

Herein, the initial position may be any suitable position, for example, a position near a left side of a battery module or a position near a right side of the battery module. During implementation, after a check on the battery module is completed or when the battery module fails the check, the vision capture mechanism needs to be controlled to move to the initial position, to facilitate capture of images of each battery cell and end plate of the next battery module.

In some implementations, the check method further includes step S16.

Step S16: In a case that the check result indicates that the battery module has a defect, control a preset prompting apparatus to output corresponding prompting information.

Herein, the prompting apparatus may be any suitable apparatus that can implement a prompting function, for example, a display apparatus or a voice apparatus. During implementation, the prompting apparatus may be located in the check device, or may be in communication connection with the check device.

The prompting information may be any suitable prompting information. For example, the prompting information may be "The faulty battery module has been discharged. Please deal with it in time". During implementation, the check device may send the prompting information to the prompting apparatus, and the prompting information may be stored in the prompting apparatus.

In the implementations of this disclosure, corresponding fault-prompting information is output in real time, to help a worker deal with it in time, thereby ensuring proper discharge of a next faulty battery module, so that the line does not stop when a battery module is faulty.

FIG. 2 is a schematic diagram 2 of an implementation procedure of a check method for a battery module according to an embodiment of this disclosure. As shown in FIG. 2, the check method is applied to a control apparatus, and the check method includes step S21 to step S25.

Step S21: Obtain information about the battery module.

Herein, the information about the battery module may be obtained in any suitable manner. For example, a bar code/quick response code on the battery module is scanned. For another example, an identification on a tray that carries the battery module is obtained.

Step S22: Adjust a working parameter of a vision capture mechanism based on the information about the battery module.

Herein, the working parameter of the vision capture mechanism may include but is not limited to a longitudinal distance between two shafts in a variable-distance mechanism, a position of a capture apparatus on a corresponding shaft, a transverse movement distance of each shaft, a working parameter of the capture apparatus, or the like. During implementation, in a case that the information about the battery module is different from information about a previous battery module, a first adjustment instruction including a new working parameter is sent to the vision capture mechanism, so that the vision capture mechanism makes a corresponding adjustment based on the new working parameter. In a case that the information about the battery module is the same as the information about the previous battery module, a second adjustment instruction is sent to the vision capture mechanism, so that the vision capture mechanism works based on the second adjustment instruction. The second adjustment instruction may include a working parameter of the previous battery module, or may not include a working parameter of the previous battery module.

Step S23: Control the vision capture mechanism to capture an image of the battery module on the tray.

Step S24: Determine a check result of the battery module based on the image of the battery module, where the check result indicates whether the battery module has a defect, and the defect includes at least one of the following: a faulty battery cell is present in the battery module, or an end plate of the battery module is improperly assembled.

Step S25: In a case that the check result indicates that the battery module has a defect, control a discharge apparatus to move the battery module into a carrier apparatus.

Herein, step S23 to step S25 correspond to step S11 to step S13 respectively, and during implementation, reference may be made to the specific implementations of step S11 to step S13.

In this embodiment of this disclosure, information about two battery modules is compared, to quickly determine whether a type of a battery module needs to be switched. In addition, the working parameter of the vision capture mechanism is adjusted in time to be compatible with battery modules of different specifications, so that universality and adaptability of a check device are improved, and requirements of highly flexible battery production can be met.

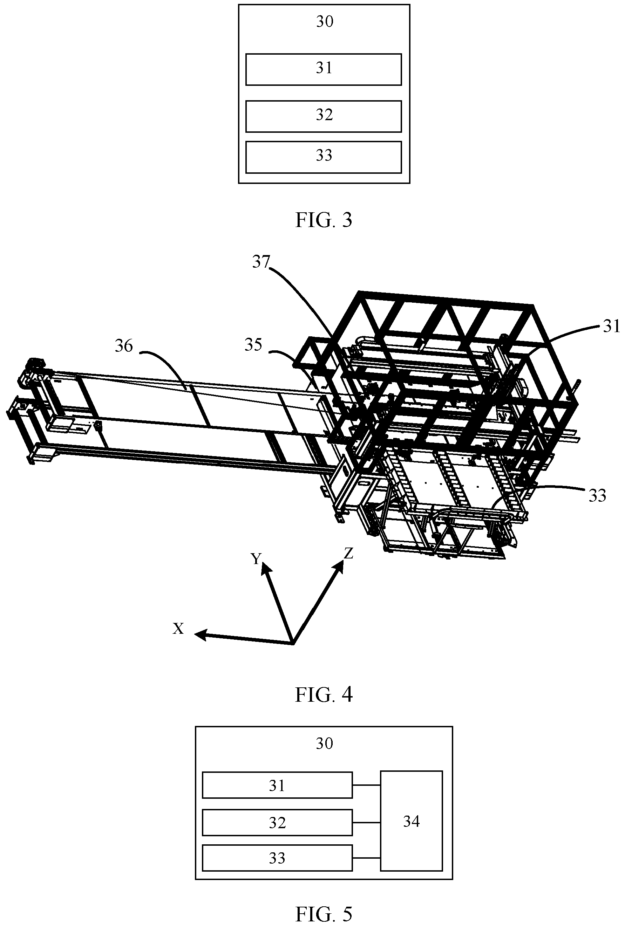

Based on the foregoing embodiments, an embodiment of this disclosure further provides a check device for a battery module. FIG. 3 is a schematic diagram 1 of a composition structure of a check device for a battery module according to an embodiment of this disclosure. As shown in FIG. 3, the check device 30 includes a vision capture mechanism 31, a discharge apparatus 32, and a carrier apparatus 33.

The vision capture mechanism 31 is configured to capture an image of the battery module on a tray.

The carrier apparatus 33 is configured to store a faulty battery module.

The discharge apparatus 32 is configured to: in a case that a check result of the battery module indicates that the battery module has a defect, move the battery module into the carrier apparatus, where the check result of the battery module is determined based on the image of the battery module, and the defect includes at least one of the following: a faulty battery cell is present in the battery module, or a target end plate of the battery module is improperly assembled.

Herein, the vision capture mechanism 31 may be any suitable apparatus that can implement this function, for example, a capture apparatus or a capture apparatus and a variable-distance mechanism. The capture apparatus may include but is not limited to a camera, a camera lens, or the like. The variable-distance mechanism includes at least two shafts, the capture apparatus is located on the variable-distance mechanism, and a quantity of capture apparatuses may be adapted to a quantity of shafts of the variable-distance mechanism.

In some implementations, the vision capture mechanism 31 includes a variable-distance mechanism and a capture apparatus located on the variable-distance mechanism, and a quantity of shafts of the variable-distance mechanism matches a quantity of cameras in the capture apparatus.

Herein, the variable-distance mechanism may be any suitable mechanism. During implementation, the variable-distance mechanism includes two shafts, and a quantity of capture apparatuses may be adapted to a quantity of shafts of the variable-distance mechanism. For example, if the variable-distance mechanism includes two shafts, there may be two capture apparatuses. During implementation, each capture apparatus is installed on one shaft, a distance between different capture apparatuses is adjusted by moving two shafts of the variable-distance mechanism longitudinally, a height of the capture apparatus from a battery cell is adjusted by adjusting a position of the capture apparatus on the shaft, and a capture position is adjusted by moving the shaft transversely, so that the capture apparatus can capture images of battery cells or end plates of the battery module in different positions. In this case, the capture apparatus is installed on the shaft of the variable-distance mechanism to implement movement of the capture apparatus, to obtain images of target end plates and target battery cells in different positions. This improves flexibility of the capture apparatus and reduces hardware costs and system complexity compared with fastening a capture apparatus in each position.

The image of the battery module may include but is not limited to at least one of the following: a first image of a target battery cell in the battery module, a second image of the target end plate of the battery module, or the like.

In some implementations, the image of the battery module includes the first image of the target battery cell in the battery module. The vision capture mechanism 31 is further configured to: capture the first image of the target battery cell; and send the first image of the target battery cell to a preset control apparatus, so that the control apparatus determines the check result of the battery module based on the first image of the target battery cell.

Herein, the target battery cell may be one of a plurality of battery cells in the battery module. During implementation, for "capture the first image of the target battery cell", reference may be made to the specific implementations of step S11.

The control apparatus may be any suitable apparatus that can implement this function, for example, a PLC. During implementation, for the control apparatus determining the check result of the battery module based on the first image of the target battery cell, reference may be made to the specific implementations of step S121. In some implementations, the control apparatus may be located in the check device, or may be independent of the check device.

In this case, the battery module is automatically checked based on the image of the target battery cell. This improves check accuracy and check efficiency compared with a manual check.

In some implementations, the image of the battery module includes the second image of the target end plate of the battery module. The vision capture mechanism 31 is further configured to: capture the second image of the target end plate; and send the second image of the target end plate to a preset control apparatus, so that the control apparatus determines the check result of the battery module based on the second image of the target end plate.

Herein, the target end plate may be any end plate or all end plates at two ends of the battery module. During implementation, for "capture the second image of the target end plate in the battery module", reference may be made to the specific implementations of step S11.

For the control apparatus determining the check result of the battery module based on the second image of the target end plate, reference may be made to the specific implementations of step S122.

In this case, the battery module is automatically checked based on the image of the target end plate. This improves check accuracy and check efficiency compared with a manual check.

The discharge apparatus 32 may be any suitable apparatus that can discharge a faulty battery module.

The carrier apparatus 33 may be any suitable apparatus that can store a battery module, for example, a trolley. During implementation, the carrier apparatus 33 may be in any suitable shape, for example, a roller shape.

In some implementations, the carrier apparatus 33 is connected to the check device 30 in a detachable manner, such as an insertable/removable manner, to facilitate removal of the faulty battery module.

In some implementations, there may be at least one carrier apparatus 33. During implementation, after the carrier apparatus is removed, a spare carrier apparatus is inserted into the check device, to facilitate proper discharge of a next faulty battery module.

In some implementations, the check device further includes a conveyance apparatus. The conveyance apparatus is configured to convey the battery module to a first specified position, where a direction in which the conveyance apparatus conveys the battery module is the same as a direction of the discharge apparatus, and the direction in which the conveyance apparatus conveys the battery module crosses a direction of the carrier apparatus.

Herein, the conveyance apparatus may be any suitable apparatus that can implement a conveyance function, for example, a belt conveyor.

The first specified position may be any suitable position. The first specified position is a position in a direction of conveying a battery module.

The discharge apparatus is located in the direction of conveying a battery module, to facilitate quick and accurate discharge of a faulty battery module.

The direction of the carrier apparatus crosses the direction of conveying a battery module. In this way, a position of the carrier apparatus avoids a battery module conveyed by the conveyance apparatus. This helps the conveyance apparatus convey the battery module smoothly.

FIG. 4 is a schematic diagram 2 of a composition structure of a check device for a battery module according to an embodiment of this disclosure. As shown in FIG. 4, the check device includes a vision capture mechanism 31, a discharge apparatus (not shown in the figure), a carrier apparatus 33, a rack 35, and a conveyance apparatus 36.

The vision capture mechanism 31 is disposed on the rack 35, and the vision capture mechanism 31 includes a first shaft, a second shaft, a first camera, and a second camera. The first camera is located on the first shaft, and the second camera is located on the second shaft. During implementation, the first shaft and the second shaft are controlled to move toward or away from each other in a direction Y, to adjust a longitudinal distance between the first shaft and the second shaft; the first shaft and the second shaft are controlled to move in a direction X, to implement transverse movement of the first shaft and the second shaft; and the first camera is controlled to move in a direction Z, to adjust a height of the first camera from a target battery cell, and the second camera is controlled to move in the direction Z, to adjust a height of the second camera from a target battery cell.

The discharge apparatus is disposed on the rack 35, and is configured to move a faulty battery module into the carrier apparatus 33.

The carrier apparatus 33 is connected to the rack 35 in an insertable/removable manner, and the carrier apparatus 33 is configured to store a faulty battery module.

The conveyance apparatus 36 is disposed on the rack 35, and is configured to convey a battery module on a tray 37 to a specified check position along a flow direction of the battery module. The conveyance apparatus 36 may be a belt conveyor. During implementation, the battery module is conveyed by the conveyance apparatus 36 to the check position for a check. After the check on the battery module in the check position is completed, the battery module in the check position may be conveyed by the conveyance apparatus 36 to a second specified position, and a next to-be-checked battery module may be placed in the vacated check position.

In some implementations, the check device further includes a control apparatus. The control apparatus is configured to: determine a check result of the battery module based on an image of the battery module; and in a case that the check result indicates that the battery module has a defect, control the discharge apparatus to move the battery module into the carrier apparatus.

Herein, the control apparatus may be any suitable apparatus that can implement this control function, for example, a PLC. During implementation, for "determine a check result of the battery module based on an image of the battery module", reference may be made to the specific implementations of step S12.

FIG. 5 is a schematic diagram 3 of a composition structure of a check device for a battery module according to an embodiment of this disclosure. As shown in FIG. 5, the check device 30 includes a vision capture mechanism 31, a discharge apparatus 32, a carrier apparatus 33, and a control apparatus 34. The vision capture mechanism 31, the discharge apparatus 32, and the carrier apparatus 33 are separately in communication connection with the control apparatus 34.

The control apparatus 34 is configured to send, to the vision capture mechanism 31, a second adjustment instruction including a working parameter corresponding to the battery module.

The vision capture mechanism 31 is configured to adjust, based on the second adjustment instruction, a longitudinal distance between two shafts of a variable-distance mechanism and a position of a capture apparatus on a corresponding shaft.

The control apparatus 34 is further configured to send a first movement instruction to the vision capture mechanism 31, to enable the vision capture mechanism 31 to move from an initial position to a to-be-checked battery cell (corresponding to the foregoing target battery cell) based on the first movement instruction.

The control apparatus 34 is further configured to send a first obtaining instruction to the vision capture mechanism 31.

The vision capture mechanism 31 is further configured to capture a first image of a to-be-checked battery cell based on the first obtaining instruction, and send the first image of the to-be-checked battery cell to the control apparatus 34.

The control apparatus 34 is further configured to recognize the first image, to obtain information about the to-be-checked battery cell; and send the information about the to-be-checked battery cell to a MES, to obtain a first check result of the to-be-checked battery cell.

In a case that the first check result of the to-be-checked battery cell is "fail", the discharge apparatus 32 is controlled to move the battery module into the carrier apparatus 33, and a fifth movement instruction is sent to the vision capture mechanism 31, to enable the vision capture mechanism 31 to move to an initial position based on the fifth movement instruction.

In a case that the first check result of the to-be-checked battery cell is "pass" and the to-be-checked battery cell is not a last battery cell, a next battery cell is used as a to-be-checked battery cell, and a second movement instruction is sent to the vision capture mechanism 31, to enable the vision capture mechanism 31 to move from a current position to the to-be-checked battery cell based on the second movement instruction, and a process of checking the to-be-checked battery cell continues.

In a case that the first check result of the to-be-checked battery cell is "pass" and the to-be-checked battery cell is the last battery cell, a third movement instruction is sent to the vision capture mechanism 31, to enable the vision capture mechanism 31 to move to a preset position based on the third movement instruction.

The control apparatus 34 is further configured to send a second obtaining instruction to the vision capture mechanism 31.

The vision capture mechanism 31 is further configured to capture a second image of a target end plate based on the second obtaining instruction, and send the second image of the target end plate to the control apparatus 34.

The control apparatus 34 is further configured to determine a second check result of the target end plate based on the second image of the target end plate.

The control apparatus 34 is further configured to: in a case that the second check result of the target end plate is "fail", control the discharge apparatus 32 to move the battery module into the carrier apparatus 33; or in a case that the second check result of the target end plate is "pass", convey the battery module to a next assembly station; and send a fifth movement instruction to the vision capture mechanism 31, to enable the vision capture mechanism 31 to move to an initial position based on the fifth movement instruction.

In some implementations, the check device further includes a prompting apparatus. The control apparatus is further configured to: in a case that a check result indicates that the battery module has a defect, control the prompting apparatus to output prompting information.

Herein, the prompting apparatus may be any suitable apparatus that can implement a prompting function, for example, a display apparatus or a voice apparatus. During implementation, the prompting apparatus is in communication connection with the control apparatus.

The prompting information may be any suitable prompting information. For example, the prompting information may be "The faulty battery module has been discharged. Please deal with it in time".

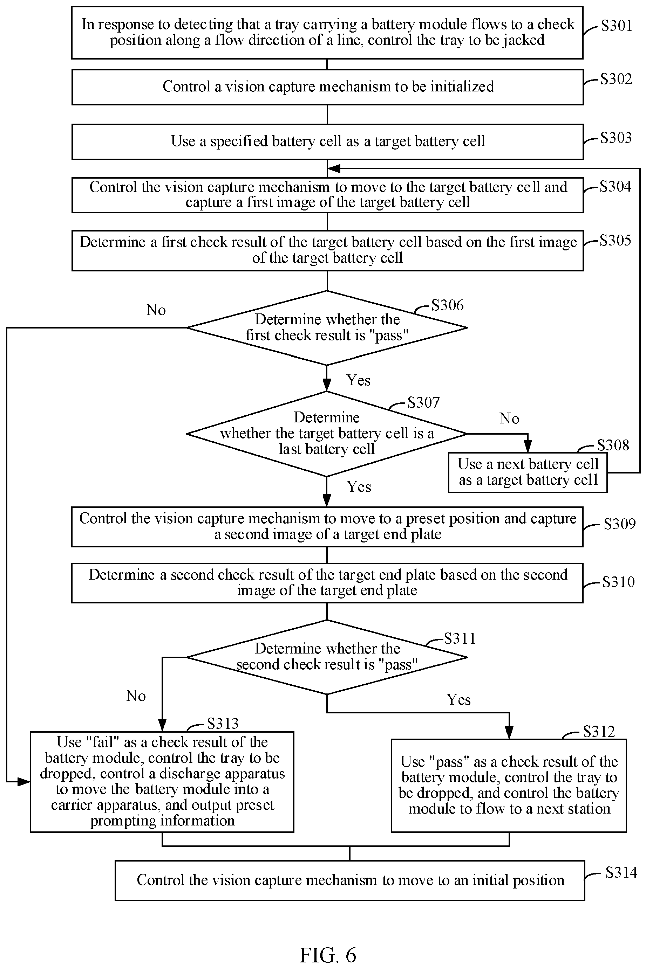

FIG. 6 is a schematic diagram 3 of an implementation procedure of a check method for a battery module according to an embodiment of this disclosure. As shown in FIG. 6, the check method includes step S301 to step S314.

Step S301: In response to detecting that a tray carrying a battery module flows to a check position along a flow direction of a line, control the tray to be jacked.

Herein, a check device further includes a jacking apparatus, and the jacking apparatus is configured to jack the tray in the check position or drop the jacked tray. During implementation, the jacking apparatus may be any suitable apparatus that can implement a jacking function.

Step S302: Control a vision capture mechanism to be initialized.

Herein, initialization includes adjustments in a direction Y and a direction Z, so that the vision capture mechanism is adapted to the battery module. To be specific, a distance is changed in the direction Y based on a fixed trajectory, to adjust a distance between two cameras, and a change is made in the direction Z based on a specified height, to adjust a height of each camera from a target battery cell. In some implementations, the battery module may be two rows of single-row modules, or may be one row of double-row module. During implementation, based on a type of the battery module, a changed distance in the direction Y and a height in the direction Z are determined to be compatible with capture of images of different types of battery modules.

Step S303: Use a specified battery cell as a target battery cell.

Herein, the specified battery cell may be a first battery cell.

Step S304: Control the vision capture mechanism to move to the target battery cell and capture a first image of the target battery cell.

Step S305: Determine a first check result of the target battery cell based on the first image of the target battery cell.

Herein, information about the target battery cell is obtained based on the first image, and the information about the target battery cell is sent to a MES for a check, to obtain the first check result.

Step S306: Determine whether the first check result is "pass", and if yes, proceed to step S307, or if no, proceed to step S313.

Step S307: Determine whether the target battery cell is a last battery cell, and if yes, proceed to step S309, or if no, proceed to step S308.

Step S308: Use a next battery cell as a target battery cell, and proceed to step S304.

Step S309: Control the vision capture mechanism to move to a preset position and capture a second image of a target end plate.

Step S310: Determine a second check result of the target end plate based on the second image of the target end plate.

Herein, the target end plate is compared with a corresponding standard end plate, to obtain the second check result.

Step S311: Determine whether the second check result is "pass", and if yes, proceed to step S312, or if no, proceed to step S313.

Step S312: Use "pass" as a check result of the battery module, control the tray to be dropped, control the battery module to flow to a next station, and proceed to step S314.

Step S313: Use "fail" as a check result of the battery module, control the tray to be dropped, control a discharge apparatus to move the battery module into a carrier apparatus, output preset prompting information, and proceed to step S314.

Herein, based on the prompting information, a worker removes the carrier apparatus from the check device and inserts a spare carrier apparatus, to facilitate proper discharge of a next faulty battery module.

Step S314: Control the vision capture mechanism to move to an initial position.

During implementation, alternatively, a check on a target end plate may be first performed. To be specific, after step S302, step S309 and step S310 may be first performed, and in a case that a second check result of the target end plate is "pass", a check on each battery cell, that is, step S303 to step S308, may be performed.

In this embodiment of this disclosure, firstly, the battery module is automatically checked, which reduces check costs and check efficiency compared with a manual check. Secondly, each battery cell and end plate in the battery module are checked, to improve accuracy of the check result of the battery module, so as to improve quality and stability of the battery module, and further improve performance and a yield of a formed battery pack. Thirdly, a faulty battery module is automatically discharged, which reduces labor costs and shortens handling duration compared with manual discharge, so that productivity of the line is ensured, and production requirements of high timeliness and high efficiency can be met. Finally, the faulty battery module is stored by using the carrier apparatus, so that automatic running of a system is implemented, and a possibility of a shutdown in a case that a battery module has a defect is reduced.

In some implementations, in a case that an image of the battery module includes the first image of the target battery cell in the battery module, a control apparatus is further configured to: control the vision capture mechanism to move from a current position to a position corresponding to the target battery cell, and send a first obtaining instruction to the vision capture mechanism. The vision capture mechanism is further configured to capture the first image of the target battery cell based on the first obtaining instruction.

In some implementations, in a case that the first check result of the target battery cell indicates that no defect is present, the control apparatus is further configured to: in a case that the target battery cell meets a preset condition, control the vision capture mechanism to move to a position corresponding to a next target battery cell, and send a first obtaining instruction to the vision capture mechanism, to enable the vision capture mechanism to capture a first image of the next target battery cell; and/or in a case that the target battery cell does not meet the preset condition, control the vision capture mechanism to move to a preset position, and send a second obtaining instruction to the vision capture mechanism, to enable the vision capture mechanism to capture the second image of the target end plate of the battery module.

In some implementations, in a case that the image of the battery module includes the second image of the target end plate of the battery module, the control apparatus is further configured to: control the vision capture mechanism to move from a current position to a preset position, and send a second obtaining instruction to the vision capture mechanism. The vision capture mechanism is further configured to capture the second image of the target end plate based on the second obtaining instruction.

In some implementations, in a case that the second check result of the target end plate indicates that no defect is present, the control apparatus is further configured to: control the vision capture mechanism to move to a position corresponding to the target battery cell in the battery module, and send a first obtaining instruction to the vision capture mechanism. The vision capture mechanism is further configured to capture the first image of the target battery cell based on the first obtaining instruction.

In some implementations, the control apparatus is further configured to control the vision capture mechanism to move to an initial position.

In some implementations, the control apparatus is further configured to: obtain information about the battery module; and adjust a working parameter of the vision capture mechanism based on the information about the battery module.

The descriptions of the foregoing device embodiments are similar to the descriptions of the foregoing method embodiments, and have similar beneficial effects as the method embodiments. For technical details that are not disclosed in the device embodiments of this disclosure, refer to the descriptions of the method embodiments of this disclosure.

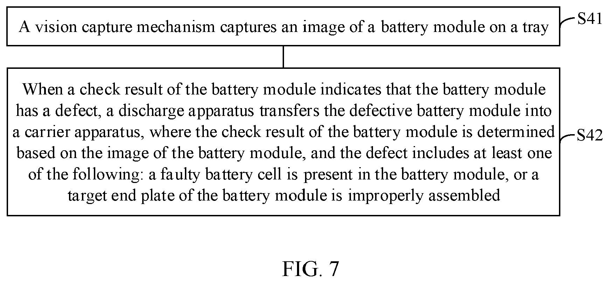

FIG. 7 is a schematic diagram 4 of an implementation procedure of a check method for a battery module according to an embodiment of this disclosure. The check method is applied to any one of the foregoing check devices. As shown in FIG. 7, the check method includes step S41 and step S42.

Step S41: A vision capture mechanism captures an image of the battery module on a tray.

Herein, the vision capture mechanism may be any suitable apparatus that can implement this function. The image of the battery module may include but is not limited to an image of a single battery cell, an image of at least one end plate, or the like.

In some implementations, the vision capture mechanism includes a variable-distance mechanism and a capture apparatus located on the variable-distance mechanism, the image of the battery module includes a first image of a target battery cell in the battery module, and step S41 includes step S411 and step S412.

Step S411: The variable-distance mechanism moves from a current position to a capture position corresponding to the target battery cell.

Herein, the current position may be an initial position, a position corresponding to a current target battery cell, a capture position corresponding to a target end plate, or the like. The capture position corresponding to the target battery cell may be any suitable position in which the capture apparatus can capture images of the target battery cell.

Step S412: When the variable-distance mechanism moves to the capture position corresponding to the target battery cell, the capture apparatus captures the first image of the target battery cell.

Herein, when the variable-distance mechanism moves to the corresponding capture position, the capture apparatus is also located in the corresponding capture position, and then the capture apparatus can accurately capture the image of the target battery cell.

In the implementations of this disclosure, movement of the capture apparatus is implemented through movement of the variable-distance mechanism, so that accuracy of the movement of the capture apparatus is improved. In addition, the capture apparatus is moved to obtain images of target battery cells in different positions, which reduces hardware costs and system complexity compared with deploying a capture apparatus in each position.

In some implementations, the vision capture mechanism includes a variable-distance mechanism and a capture apparatus located on the variable-distance mechanism, the image of the battery module includes a second image of a target end plate of the battery module, and step S41 includes step S413 and step S414.

Step S413: The variable-distance mechanism moves from a current position to a capture position corresponding to the target end plate.

Herein, the current position may be an initial position, a position corresponding to a target battery cell, or the like. The capture position corresponding to the target end plate may be any suitable position in which the capture apparatus can capture images of the target end plate.

Step S414: When the variable-distance mechanism moves to the capture position corresponding to the target end plate, the capture apparatus captures the second image of the target end plate.

Herein, when the variable-distance mechanism moves to the corresponding capture position, the capture apparatus is also located in the corresponding capture position, and then the capture apparatus can accurately capture the image of the target end plate.

In the implementations of this disclosure, movement of the capture apparatus is implemented through movement of the variable-distance mechanism, so that accuracy of the movement of the capture apparatus is improved. In addition, the capture apparatus is moved to obtain the image of the target end plate, which reduces hardware costs and system complexity compared with deploying a capture apparatus in each position.

Step S42: When a check result of the battery module indicates that the battery module has a defect, a discharge apparatus transfers the defective battery module into a carrier apparatus, where the check result of the battery module is determined based on the image of the battery module, and the defect includes at least one of the following: a faulty battery cell is present in the battery module, or the target end plate of the battery module is improperly assembled.

Herein, for a manner of determining the check result of the battery module, reference may be made to the specific implementations of step S12. For the discharge apparatus transferring the defective battery module, reference may be made to the specific implementations of step S13. In this way, the defective battery module is discharged in time, and there is no need to shut down the machine for handling.

In this embodiment of this disclosure, firstly, the battery module is automatically checked, which reduces check costs and check efficiency compared with a manual check. Secondly, each battery cell and end plate in the battery module are checked, to improve accuracy of the check result of the battery module, so as to improve quality and stability of the battery module, and further improve performance and a yield of a formed battery pack. Finally, a faulty battery module is automatically discharged, which reduces labor costs and shortens handling duration compared with manual discharge, so that productivity of a line is ensured, and production requirements of high timeliness and high efficiency can be met.

In some implementations, the check method further includes step S43.

Step S43: When the check result of the battery module indicates that the battery module has no defect, a conveyance apparatus of the check device conveys the battery module to a second specified position.

Herein, the conveyance apparatus may be any suitable apparatus that can implement a conveyance function, for example, a belt conveyor. The second specified position may be any suitable position. During implementation, the second specified position may be a position in a next process (for example, boxing) after assembly of the battery module.

In the implementations of this disclosure, the battery module without a defect is conveyed by the conveyance apparatus to the second specified position, and a vacated position may receive a next battery module for a check.

In some implementations, the check method further includes at least one of step S441 to step S443.

Step S441: In a case that a first check result of the target battery cell indicates that no defect is present and the target battery cell meets a preset condition, the variable-distance mechanism moves from the capture position corresponding to the target battery cell to a capture position corresponding to a next target battery cell; and when the variable-distance mechanism moves to the capture position corresponding to the next target battery cell, the capture apparatus captures a first image of the next target battery cell.

Herein, the preset condition may be any suitable condition, for example, "not a last battery cell". A distance between the capture position corresponding to the next target battery cell and the capture position corresponding to the target battery cell may be a distance between the two battery cells.

For "the variable-distance mechanism moves from the capture position corresponding to the target battery cell to a capture position corresponding to a next target battery cell; and when the variable-distance mechanism moves to the capture position corresponding to the next target battery cell, the capture apparatus captures a first image of the next target battery cell" in step S441, reference may be made to the specific implementations of step S411 and step S412.

Step S442: In a case that the first check result of the target battery cell indicates that no defect is present and the target battery cell does not meet the preset condition, the variable-distance mechanism moves from the capture position corresponding to the target battery cell to the capture position corresponding to the target end plate of the battery module; and when the variable-distance mechanism moves to the capture position corresponding to the target end plate, the capture apparatus captures the second image of the target end plate.

Herein, a preset position may be any suitable position in which the second image of the target end plate can be obtained. In some implementations, for different types of battery cells, the preset position may be the same or different. For "the variable-distance mechanism moves from the capture position corresponding to the target battery cell to the capture position corresponding to the target end plate of the battery module; and when the variable-distance mechanism moves to the capture position corresponding to the target end plate, the capture apparatus captures the second image of the target end plate" in step S442, reference may be made to the specific implementations of step S411 and step S412.

Step S443: In a case that the first check result of the target battery cell indicates that a defect is present, the variable-distance mechanism moves from the capture position corresponding to the target battery cell to an initial position.

Herein, the initial position may be any suitable position, for example, a position near a left side of a battery module or a position near a right side of the battery module. During implementation, when the battery module has a defect, the capture apparatus needs to be moved to the initial position, to facilitate capture of an image of a next battery module.

In the implementations of this disclosure, the variable-distance mechanism moves based on the target battery cell and the check result of the target battery cell, so that accuracy of movement of the variable-distance mechanism is improved. In addition, the capture apparatus is moved to obtain images of objects in different positions, which reduces hardware costs and system complexity compared with deploying a capture apparatus in each position.

In some implementations, the check method further includes step S451 and/or step S452.

Step S451: In a case that a second check result of the target end plate indicates that no defect is present, the variable-distance mechanism moves from the capture position corresponding to the target end plate to the capture position corresponding to the target battery cell in the battery module; and when the variable-distance mechanism moves to the capture position corresponding to the target battery cell, the capture apparatus captures the first image of the target battery cell.

Herein, for step S451, reference may be made to the specific implementations of step S411 and step S412.

In some implementations, in a case that the check result of the target end plate and a first check result of each battery cell in the battery module indicate that no defect is present, the variable-distance mechanism needs to move to an initial position.

Step S452: In a case that the second check result of the target end plate indicates that a defect is present, the variable-distance mechanism moves from the capture position corresponding to the target end plate to an initial position.

Herein, the initial position may be any suitable position, for example, a position near a left side of a battery module or a position near a right side of the battery module. During implementation, when the battery module has a defect, the capture apparatus needs to be moved to the initial position, to facilitate capture of an image of a next battery module.

In the implementations of this disclosure, the variable-distance mechanism moves based on the check result of the target end plate, so that accuracy of movement of the variable-distance mechanism is improved. In addition, the capture apparatus is moved to obtain images of objects in different positions, which reduces hardware costs and system complexity compared with deploying a capture apparatus in each position.

It should be understood that "one embodiment" or "an embodiment" mentioned in the entire specification means that particular features, structures, or characteristics related to the embodiment are included in at least one embodiment of this disclosure. Therefore, "in one embodiment" or "in an embodiment" appearing throughout the specification does not necessarily refer to a same embodiment. In addition, the particular features, structures, or characteristics may be combined in one or more embodiments in any proper manner. It should be understood that, in various embodiments of this disclosure, sequence numbers of the foregoing processes do not mean execution sequences. Execution sequences of the processes should be determined based on functions and internal logic of the processes, and shall not constitute any limitation on implementation processes of embodiments of this disclosure. The sequence numbers of embodiments of this disclosure are merely for description, and do not represent superiority or inferiority of embodiments. It should be noted that, in the specification, the term "include", "comprise", or any other variant thereof is intended to cover a non-exclusive inclusion, so that a process, a method, an article, or an apparatus that includes a list of elements not only includes those elements but also includes other elements that are not expressly listed, or further includes elements inherent to such a process, method, article, or apparatus. Without more constraints, an element preceded by "includes a ..." does not preclude the presence of other identical elements in the process, method, article, or apparatus that includes the element.

In the several embodiments provided in this disclosure, it should be understood that the disclosed device and method may be implemented in other manners. The device embodiments described above are merely examples. For example, the unit division is merely logical function division and may be other division during actual implementation. For example, a plurality of units or components may be combined or integrated into another system, or some features may be omitted or not performed. In addition, the displayed or discussed mutual coupling, direct coupling, or communication connection between various components may be implemented through some interfaces, and the indirect coupling or communication connection between devices or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments. In addition, all functional units in embodiments of this disclosure may be integrated into one processing unit, or each unit may be used as a separate unit, or two or more units may be integrated into one unit. The integrated unit may be implemented in the form of hardware, or in the form of a combination of hardware and a software functional unit.

The foregoing descriptions are merely implementations of this disclosure, but are not intended to limit the protection scope of this disclosure. Any variation or replacement readily conceived by a person skilled in the art within the technical scope disclosed in this disclosure shall fall within the protection scope of this disclosure.

### Industrial practicability

In embodiments of this disclosure, a vision capture mechanism is controlled to capture an image of a battery module on a tray; a check result of the battery module is determined based on the image of the battery module, where the check result indicates whether the battery module has a defect, and the defect includes at least one of the following: a faulty battery cell is present in the battery module, or an end plate of the battery module is improperly assembled; and in a case that the check result indicates that the battery module has a defect, a discharge apparatus is controlled to move the battery module into a carrier apparatus. In this way, firstly, the battery module is automatically checked, which reduces check costs and check efficiency compared with a manual check. Secondly, each battery cell and end plate in the battery module are checked, to improve accuracy of the check result of the battery module, so as to improve quality and stability of the battery module, and further improve performance and a yield of a formed battery pack. Finally, a faulty battery module is automatically discharged, which reduces labor costs and shortens handling duration compared with manual discharge, so that productivity of a line is ensured, and production requirements of high timeliness and high efficiency can be met.

## Claims

1. A check method for a battery module, applied to a control apparatus, wherein the check method comprises:
controlling (S11) a vision capture mechanism to capture an image of the battery module on a tray;
determining (S12) a check result of the battery module based on the image of the battery module, wherein the check result indicates whether the battery module has a defect, and the defect comprises an end plate of the battery module being improperly assembled; and
in a case that the check result indicates that the battery module has a defect, controlling (S13) a discharge apparatus to move the battery module into a carrier apparatus;
wherein the image of the battery module comprises a second image of a target end plate of the battery module;
the determining (S12) a check result of the battery module based on the image of the battery module comprises:
determining a second check result of the target end plate based on the second image of the target end plate; and determining the check result of the battery module based on the second check result of the target end plate;
wherein the determining a second check result of the target end plate based on the second image of the target end plate comprises:
recognizing the second image of the target end plate, to obtain information about the target end plate; and
checking the information about the target end plate, to obtain the second check result of the target end plate.

2. The check method according to claim 1, wherein the defect comprises a faulty battery cell being present in the battery module, and the image of the battery module comprises a first image of a target battery cell in the battery module; and
the determining (S12) a check result of the battery module based on the image of the battery module comprises:
determining a first check result of the target battery cell based on the first image of the target battery cell; and determining the check result of the battery module based on the first check result of the target battery cell.

3. The check method according to claim 2, wherein the determining a first check result of the target battery cell based on the first image of the target battery cell comprises:
recognizing the first image of the target battery cell, to obtain information about the target battery cell; and
checking the information about the target battery cell, to obtain the first check result of the target battery cell.

4. The check method according to claim 3, wherein the determining the check result of the battery module based on the first check result of the target battery cell comprises at least one of the following:
in a case that the first check result of the target battery cell indicates that a defect is present, using the first check result as the check result of the battery module;
in a case that the first check result of the target battery cell indicates that no defect is present and the target battery cell meets a preset condition, controlling the vision capture mechanism to capture a first image of a next target battery cell; determining a first check result of the next target battery cell based on the first image of the next target battery cell; and determining the check result of the battery module based on the first check result of the next target battery cell; or
in a case that the first check result of the target battery cell indicates that no defect is present and the target battery cell does not meet the preset condition, controlling the vision capture mechanism to capture the second image of the target end plate; determining the second check result of the target end plate based on the second image of the target end plate; and determining the check result of the battery module based on the second check result of the target end plate.

5. The check method according to claim 1, wherein the determining the check result of the battery module based on the second check result of the target end plate comprises at least one of the following:
in a case that the second check result of the target end plate indicates that the target end plate has a defect, using the second check result of the target end plate as the check result of the battery module; or
in a case that the second check result of the target end plate indicates that the target end plate has no defect, controlling the vision capture mechanism to capture a first image of the target battery cell; determining a first check result of the target battery cell based on the first image of the target battery cell; and determining the check result of the battery module based on the first check result of the target battery cell.

6. The check method according to claim 1, wherein in a case that the image of the battery module comprises a first image of a target battery cell in the battery module, the controlling (S11) a vision capture mechanism to capture an image of the battery module on a tray comprises:
controlling the vision capture mechanism to move from a current position to a position corresponding to the target battery cell; and
sending a first obtaining instruction to the vision capture mechanism, to enable the vision capture mechanism to capture the first image of the target battery cell based on the first obtaining instruction.

7. The check method according to claim 1, wherein in a case that the image of the battery module comprises a second image of a target end plate of the battery module, the controlling (S11) a vision capture mechanism to capture an image of the battery module on a tray comprises:
controlling the vision capture mechanism to move from a current position to a preset position; and
sending a second obtaining instruction to the vision capture mechanism, to enable the vision capture mechanism to capture the second image of the target end plate based on the second obtaining instruction.

8. The check method according to any one of claims 1 to 7, wherein the check method further comprises:
obtaining (S21) information about the battery module; and
adjusting (S22) a working parameter of the vision capture mechanism based on the information about the battery module.

9. A check device (30) for a battery module, wherein the check device (30) comprises a vision capture mechanism (31), a discharge apparatus (32), and a carrier apparatus (33);
the vision capture mechanism (31) is configured to capture an image of the battery module on a tray (37);
the carrier apparatus (33) is configured to store a faulty battery module; and
the discharge apparatus (32) is configured to: in a case that a check result of the battery module indicates that the battery module has a defect, move the battery module into the carrier apparatus (33), wherein the check result of the battery module is determined based on the image of the battery module, and the defect comprises a target end plate of the battery module being improperly assembled,
wherein the image of the battery module comprises a second image of a target end plate of the battery module; and
the determining (S12) a check result of the battery module based on the image of the battery module comprises:
determining a second check result of the target end plate based on the second image of the target end plate; and determining the check result of the battery module based on the second check result of the target end plate;
wherein the determining a second check result of the target end plate based on the second image of the target end plate comprises:
recognizing the second image of the target end plate, to obtain information about the target end plate; and
checking the information about the target end plate, to obtain the second check result of the target end plate.

10. The check device (30) according to claim 9, wherein the defect comprises a faulty battery cell being present in the battery module, and the image of the battery module comprises a first image of a target battery cell in the battery module; and
the determining (S12) a check result of the battery module based on the image of the battery module comprises:
determining a first check result of the target battery cell based on the first image of the target battery cell; and determining the check result of the battery module based on the first check result of the target battery cell.

11. The check device (30) according to claim 9 or 10, wherein the vision capture mechanism (31) comprises a variable-distance mechanism and a capture apparatus located on the variable-distance mechanism, and a quantity of shafts of the variable-distance mechanism matches a quantity of cameras in the capture apparatus.

12. The check device (30) according to claim 9 or 10, wherein the image of the battery module comprises a first image of a target battery cell in the battery module; and
the vision capture mechanism (31) is further configured to: capture the first image of the target battery cell; and send the first image of the target battery cell to a preset control apparatus (34), so that the control apparatus (34) determines the check result of the battery module based on the first image of the target battery cell.

13. The check device (30) according to claim 9 or 10, wherein the image of the battery module comprises a second image of the target end plate of the battery module; and
the vision capture mechanism (31) is further configured to: capture the second image of the target end plate; and send the second image of the target end plate to a preset control apparatus (34), so that the control apparatus (34) determines the check result of the battery module based on the second image of the target end plate.

14. The check device (30) according to any one of claims 9 to 13, wherein the check device (30) further comprises a conveyance apparatus (36); and
the conveyance apparatus (36) is configured to convey the battery module to a first specified position, wherein a direction in which the conveyance apparatus (36) conveys the battery module is the same as a direction of the discharge apparatus (32), and the direction in which the conveyance apparatus (36) conveys the battery module crosses a direction of the carrier apparatus (33).

## Patentansprüche

1. Prüfverfahren für ein Batteriemodul, das auf eine Steuervorrichtung angewendet wird, wobei das Prüfverfahren Folgendes umfasst:
Steuern (S11) eines Bilderfassungsmechanismus, um ein Bild des Batteriemoduls auf einem Träger zu erfassen;
Bestimmen (S12) eines Prüfergebnisses des Batteriemoduls basierend auf dem Bild des Batteriemoduls, wobei das Prüfergebnis angibt, ob das Batteriemodul einen Defekt aufweist, und der Defekt umfasst, dass eine Endplatte des Batteriemoduls unsachgemäß montiert ist; und
in einem Fall, in dem das Prüfergebnis angibt, dass das Batteriemodul einen Defekt aufweist, Steuern (S13) einer Ausschleusvorrichtung, um das Batteriemodul in eine Trägervorrichtung zu bewegen;
wobei das Bild des Batteriemoduls ein zweites Bild einer Zielendplatte des Batteriemoduls umfasst;
das Bestimmen (S12) eines Prüfergebnisses des Batteriemoduls basierend auf dem Bild des Batteriemoduls umfasst:
Bestimmen eines zweiten Prüfergebnisses der Zielendplatte basierend auf dem zweiten Bild der Zielendplatte; und Bestimmen des Prüfergebnisses des Batteriemoduls basierend auf dem zweiten Prüfergebnis der Zielendplatte;
wobei das Bestimmen eines zweiten Prüfergebnisses der Zielendplatte basierend auf dem zweiten Bild der Zielendplatte umfasst:
Erkennen des zweiten Bildes der Zielendplatte, um Informationen über die Zielendplatte zu erhalten; und
Prüfen der Informationen über die Zielendplatte, um das zweite Prüfergebnis der Zielendplatte zu erhalten.

2. Prüfverfahren nach Anspruch 1, wobei der Defekt umfasst, dass eine fehlerhafte Batteriezelle im Batteriemodul vorhanden ist, und das Bild des Batteriemoduls ein erstes Bild einer Zielbatteriezelle im Batteriemodul umfasst; und
das Bestimmen (S12) eines Prüfergebnisses des Batteriemoduls basierend auf dem Bild des Batteriemoduls umfasst:
Bestimmen eines ersten Prüfergebnisses der Zielbatteriezelle basierend auf dem ersten Bild der Zielbatteriezelle; und Bestimmen des Prüfergebnisses des Batteriemoduls basierend auf dem ersten Prüfergebnis der Zielbatteriezelle.

3. Prüfverfahren nach Anspruch 2, wobei das Bestimmen eines ersten Prüfergebnisses der Zielbatteriezelle basierend auf dem ersten Bild der Zielbatteriezelle umfasst:
Erkennen des ersten Bildes der Zielbatteriezelle, um Informationen über die Zielbatteriezelle zu erhalten; und
Prüfen der Informationen über die Zielbatteriezelle, um das erste Prüfergebnis der Zielbatteriezelle zu erhalten.

4. Prüfverfahren nach Anspruch 3, wobei das Bestimmen des Prüfergebnisses des Batteriemoduls basierend auf dem ersten Prüfergebnis der Zielbatteriezelle mindestens eines der Folgenden umfasst:
in einem Fall, in dem das erste Prüfergebnis der Zielbatteriezelle angibt, dass ein Defekt vorliegt, Verwenden des ersten Prüfergebnisses als das Prüfergebnis des Batteriemoduls;
in einem Fall, in dem das erste Prüfergebnis der Zielbatteriezelle angibt, dass kein Defekt vorliegt und die Zielbatteriezelle eine voreingestellte Bedingung erfüllt, Steuern des Bilderfassungsmechanismus, um ein erstes Bild einer nächsten Zielbatteriezelle zu erfassen; Bestimmen eines ersten Prüfergebnisses der nächsten Zielbatteriezelle basierend auf dem ersten Bild der nächsten Zielbatteriezelle; und Bestimmen des Prüfergebnisses des Batteriemoduls basierend auf dem ersten Prüfergebnis der nächsten Zielbatteriezelle; oder
in einem Fall, in dem das erste Prüfergebnis der Zielbatteriezelle angibt, dass kein Defekt vorliegt und die Zielbatteriezelle die voreingestellte Bedingung nicht erfüllt, Steuern des Bilderfassungsmechanismus, um das zweite Bild der Zielendplatte zu erfassen; Bestimmen des zweiten Prüfergebnisses der Zielendplatte basierend auf dem zweiten Bild der Zielendplatte; und Bestimmen des Prüfergebnisses des Batteriemoduls basierend auf dem zweiten Prüfergebnis der Zielendplatte.

5. Prüfverfahren nach Anspruch 1, wobei das Bestimmen des Prüfergebnisses des Batteriemoduls basierend auf dem zweiten Prüfergebnis der Zielendplatte mindestens eines der Folgenden umfasst:
in einem Fall, in dem das zweite Prüfergebnis der Zielendplatte angibt, dass die Zielendplatte einen Defekt aufweist, Verwenden des zweiten Prüfergebnisses der Zielendplatte als das Prüfergebnis des Batteriemoduls; oder
in einem Fall, in dem das zweite Prüfergebnis der Zielendplatte angibt, dass die Zielendplatte keinen Defekt aufweist, Steuern des Bilderfassungsmechanismus, um ein erstes Bild der Zielbatteriezelle zu erfassen; Bestimmen eines ersten Prüfergebnisses der Zielbatteriezelle basierend auf dem ersten Bild der Zielbatteriezelle; und Bestimmen des Prüfergebnisses des Batteriemoduls basierend auf dem ersten Prüfergebnis der Zielbatteriezelle.

6. Prüfverfahren nach Anspruch 1, wobei in einem Fall, in dem das Bild des Batteriemoduls ein erstes Bild einer Zielbatteriezelle im Batteriemodul umfasst, das Steuern (S11) eines Bilderfassungsmechanismus, um ein Bild des Batteriemoduls auf einem Träger zu erfassen, umfasst:
Steuern des Bilderfassungsmechanismus, um sich von einer aktuellen Position zu einer Position zu bewegen, die der Zielbatteriezelle entspricht; und
Senden einer ersten Abrufanweisung an den Bilderfassungsmechanismus, um es dem Bilderfassungsmechanismus zu ermöglichen, das erste Bild der Zielbatteriezelle basierend auf der ersten Abrufanweisung zu erfassen.

7. Prüfverfahren nach Anspruch 1, wobei in einem Fall, in dem das Bild des Batteriemoduls ein zweites Bild einer Zielendplatte des Batteriemoduls umfasst, das Steuern (S11) eines Bilderfassungsmechanismus, um ein Bild des Batteriemoduls auf einem Träger zu erfassen, umfasst:
Steuern des Bilderfassungsmechanismus, um sich von einer aktuellen Position zu einer voreingestellten Position zu bewegen; und
Senden einer zweiten Abrufanweisung an den Bilderfassungsmechanismus, um es dem Bilderfassungsmechanismus zu ermöglichen, das zweite Bild der Zielendplatte basierend auf der zweiten Abrufanweisung zu erfassen.

8. Prüfverfahren nach einem der Ansprüche 1 bis 7, wobei das Prüfverfahren ferner Folgendes umfasst:
Erhalten (S21) von Informationen über das Batteriemodul; und
Anpassen (S22) eines Betriebsparameters des Bilderfassungsmechanismus basierend auf den Informationen über das Batteriemodul.

9. Prüfvorrichtung (30) für ein Batteriemodul, wobei die Prüfvorrichtung (30) einen Bilderfassungsmechanismus (31), eine Ausschleusvorrichtung (32) und eine Trägervorrichtung (33) umfasst;
der Bilderfassungsmechanismus (31) ist dazu ausgebildet, ein Bild des Batteriemoduls auf einem Träger (37) zu erfassen;
die Trägervorrichtung (33) ist dazu ausgebildet, ein fehlerhaftes Batteriemodul aufzunehmen; und
die Ausschleusvorrichtung (32) ist dazu ausgebildet: in einem Fall, in dem ein Prüfergebnis des Batteriemoduls angibt, dass das Batteriemodul einen Defekt aufweist, das Batteriemodul in die Trägervorrichtung (33) zu bewegen, wobei das Prüfergebnis des Batteriemoduls basierend auf dem Bild des Batteriemoduls bestimmt wird und der Defekt umfasst, dass eine Zielendplatte des Batteriemoduls unsachgemäß montiert ist,
wobei das Bild des Batteriemoduls ein zweites Bild einer Zielendplatte des Batteriemoduls umfasst; und
das Bestimmen (S12) eines Prüfergebnisses des Batteriemoduls basierend auf dem Bild des Batteriemoduls umfasst:
Bestimmen eines zweiten Prüfergebnisses der Zielendplatte basierend auf dem zweiten Bild der Zielendplatte; und Bestimmen des Prüfergebnisses des Batteriemoduls basierend auf dem zweiten Prüfergebnis der Zielendplatte;
wobei das Bestimmen eines zweiten Prüfergebnisses der Zielendplatte basierend auf dem zweiten Bild der Zielendplatte umfasst:
Erkennen des zweiten Bildes der Zielendplatte, um Informationen über die Zielendplatte zu erhalten; und
Prüfen der Informationen über die Zielendplatte, um das zweite Prüfergebnis der Zielendplatte zu erhalten.

10. Prüfvorrichtung (30) nach Anspruch 9, wobei der Defekt umfasst, dass eine fehlerhafte Batteriezelle im Batteriemodul vorhanden ist, und das Bild des Batteriemoduls ein erstes Bild einer Zielbatteriezelle im Batteriemodul umfasst; und
das Bestimmen (S12) eines Prüfergebnisses des Batteriemoduls basierend auf dem Bild des Batteriemoduls umfasst:
Bestimmen eines ersten Prüfergebnisses der Zielbatteriezelle basierend auf dem ersten Bild der Zielbatteriezelle; und Bestimmen des Prüfergebnisses des Batteriemoduls basierend auf dem ersten Prüfergebnis der Zielbatteriezelle.

11. Prüfvorrichtung (30) nach Anspruch 9 oder 10, wobei der Bilderfassungsmechanismus (31) einen Abstandsverstellmechanismus und eine Erfassungsvorrichtung, die sich auf dem Abstandsverstellmechanismus befindet, umfasst, und eine Anzahl von Achsen des Abstandsverstellmechanismus mit einer Anzahl von Kameras in der Erfassungsvorrichtung übereinstimmt.

12. Prüfvorrichtung (30) nach Anspruch 9 oder 10, wobei das Bild des Batteriemoduls ein erstes Bild einer Zielbatteriezelle im Batteriemodul umfasst; und
der Bilderfassungsmechanismus (31) ist ferner dazu ausgebildet: das erste Bild der Zielbatteriezelle zu erfassen; und das erste Bild der Zielbatteriezelle an eine voreingestellte Steuervorrichtung (34) zu senden, sodass die Steuervorrichtung (34) das Prüfergebnis des Batteriemoduls basierend auf dem ersten Bild der Zielbatteriezelle bestimmt.

13. Prüfvorrichtung (30) nach Anspruch 9 oder 10, wobei das Bild des Batteriemoduls ein zweites Bild der Zielendplatte des Batteriemoduls umfasst; und
der Bilderfassungsmechanismus (31) ist ferner dazu ausgebildet: das zweite Bild der Zielendplatte zu erfassen; und das zweite Bild der Zielendplatte an eine voreingestellte Steuervorrichtung (34) zu senden, sodass die Steuervorrichtung (34) das Prüfergebnis des Batteriemoduls basierend auf dem zweiten Bild der Zielendplatte bestimmt.

14. Prüfvorrichtung (30) nach einem der Ansprüche 9 bis 13, wobei die Prüfvorrichtung (30) ferner eine Fördervorrichtung (36) umfasst; und
die Fördervorrichtung (36) ist dazu ausgebildet, das Batteriemodul zu einer ersten festgelegten Position zu fördern, wobei eine Richtung, in der die Fördervorrichtung (36) das Batteriemodul fördert, dieselbe ist wie eine Richtung der Ausschleusvorrichtung (32), und die Richtung, in der die Fördervorrichtung (36) das Batteriemodul fördert, eine Richtung der Trägervorrichtung (33) kreuzt.

## Revendications

1. Procédé de vérification pour un module de batterie, appliqué à un appareil de commande, dans lequel le procédé de vérification comprend :
commander (S11) un mécanisme de capture d'image pour capturer une image du module de batterie sur un plateau ;
déterminer (S12) un résultat de vérification du module de batterie sur la base de l'image du module de batterie, dans lequel le résultat de vérification indique si le module de batterie présente un défaut, et le défaut comprend une plaque d'extrémité du module de batterie assemblée de manière incorrecte ; et
dans le cas où le résultat de vérification indique que le module de batterie présente un défaut, commander (S13) un dispositif d'évacuation pour déplacer le module de batterie dans un dispositif porteur ;
dans lequel l'image du module de batterie comprend une seconde image d'une plaque d'extrémité cible du module de batterie ;
la détermination (S12) d'un résultat de vérification du module de batterie sur la base de l'image du module de batterie comprend :
déterminer un second résultat de vérification de la plaque d'extrémité cible sur la base de la seconde image de la plaque d'extrémité cible ; et déterminer le résultat de vérification du module de batterie sur la base du second résultat de vérification de la plaque d'extrémité cible ;
dans lequel la détermination d'un second résultat de vérification de la plaque d'extrémité cible sur la base de la seconde image de la plaque d'extrémité cible comprend :
reconnaître la seconde image de la plaque d'extrémité cible, pour obtenir des informations sur la plaque d'extrémité cible ; et
vérifier les informations sur la plaque d'extrémité cible, pour obtenir le second résultat de vérification de la plaque d'extrémité cible.

2. Procédé de vérification selon la revendication 1, dans lequel le défaut comprend une cellule de batterie défectueuse présente dans le module de batterie, et l'image du module de batterie comprend une première image d'une cellule de batterie cible dans le module de batterie ; et
la détermination (S12) d'un résultat de vérification du module de batterie sur la base de l'image du module de batterie comprend :
déterminer un premier résultat de vérification de la cellule de batterie cible sur la base de la première image de la cellule de batterie cible ; et déterminer le résultat de vérification du module de batterie sur la base du premier résultat de vérification de la cellule de batterie cible.

3. Procédé de vérification selon la revendication 2, dans lequel la détermination d'un premier résultat de vérification de la cellule de batterie cible sur la base de la première image de la cellule de batterie cible comprend :
reconnaître la première image de la cellule de batterie cible, pour obtenir des informations sur la cellule de batterie cible ; et
vérifier les informations sur la cellule de batterie cible, pour obtenir le premier résultat de vérification de la cellule de batterie cible.

4. Procédé de vérification selon la revendication 3, dans lequel la détermination du résultat de vérification du module de batterie sur la base du premier résultat de vérification de la cellule de batterie cible comprend au moins l'un des éléments suivants :
dans le cas où le premier résultat de vérification de la cellule de batterie cible indique qu'un défaut est présent, utiliser le premier résultat de vérification en tant que résultat de vérification du module de batterie ;
dans le cas où le premier résultat de vérification de la cellule de batterie cible indique qu'aucun défaut n'est présent et que la cellule de batterie cible satisfait à une condition prédéfinie, commander le mécanisme de capture d'image pour capturer une première image d'une cellule de batterie cible suivante ; déterminer un premier résultat de vérification de la cellule de batterie cible suivante sur la base de la première image de la cellule de batterie cible suivante ; et déterminer le résultat de vérification du module de batterie sur la base du premier résultat de vérification de la cellule de batterie cible suivante ; ou
dans le cas où le premier résultat de vérification de la cellule de batterie cible indique qu'aucun défaut n'est présent et que la cellule de batterie cible ne satisfait pas à la condition prédéfinie, commander le mécanisme de capture d'image pour capturer la seconde image de la plaque d'extrémité cible ; déterminer le second résultat de vérification de la plaque d'extrémité cible sur la base de la seconde image de la plaque d'extrémité cible ; et déterminer le résultat de vérification du module de batterie sur la base du second résultat de vérification de la plaque d'extrémité cible.

5. Procédé de vérification selon la revendication 1, dans lequel la détermination du résultat de vérification du module de batterie sur la base du second résultat de vérification de la plaque d'extrémité cible comprend au moins l'un des éléments suivants :
dans le cas où le second résultat de vérification de la plaque d'extrémité cible indique que la plaque d'extrémité cible présente un défaut, utiliser le second résultat de vérification de la plaque d'extrémité cible en tant que résultat de vérification du module de batterie ; ou
dans le cas où le second résultat de vérification de la plaque d'extrémité cible indique que la plaque d'extrémité cible ne présente aucun défaut, commander le mécanisme de capture d'image pour capturer une première image de la cellule de batterie cible ; déterminer un premier résultat de vérification de la cellule de batterie cible sur la base de la première image de la cellule de batterie cible ; et déterminer le résultat de vérification du module de batterie sur la base du premier résultat de vérification de la cellule de batterie cible.

6. Procédé de vérification selon la revendication 1, dans lequel, dans le cas où l'image du module de batterie comprend une première image d'une cellule de batterie cible dans le module de batterie, la commande (S11) d'un mécanisme de capture d'image pour capturer une image du module de batterie sur un plateau comprend :
commander le mécanisme de capture d'image pour qu'il se déplace d'une position actuelle vers une position correspondant à la cellule de batterie cible ; et
envoyer une première instruction d'obtention au mécanisme de capture d'image, pour permettre au mécanisme de capture d'image de capturer la première image de la cellule de batterie cible sur la base de la première instruction d'obtention.

7. Procédé de vérification selon la revendication 1, dans lequel, dans le cas où l'image du module de batterie comprend une seconde image d'une plaque d'extrémité cible du module de batterie, la commande (S11) d'un mécanisme de capture d'image pour capturer une image du module de batterie sur un plateau comprend :
commander le mécanisme de capture d'image pour qu'il se déplace d'une position actuelle vers une position prédéfinie ; et
envoyer une seconde instruction d'obtention au mécanisme de capture d'image, pour permettre au mécanisme de capture d'image de capturer la seconde image de la plaque d'extrémité cible sur la base de la seconde instruction d'obtention.

8. Procédé de vérification selon l'une quelconque des revendications 1 à 7, dans lequel le procédé de vérification comprend en outre :
obtenir (S21) des informations sur le module de batterie ; et
ajuster (S22) un paramètre de fonctionnement du mécanisme de capture d'image sur la base des informations sur le module de batterie.

9. Dispositif de vérification (30) pour un module de batterie, dans lequel le dispositif de vérification (30) comprend un mécanisme de capture d'image (31), un dispositif d'évacuation (32) et un dispositif porteur (33) ;
le mécanisme de capture d'image (31) est configuré pour capturer une image du module de batterie sur un plateau (37) ;
le dispositif porteur (33) est configuré pour stocker un module de batterie défectueux ; et
le dispositif d'évacuation (32) est configuré pour : dans le cas où un résultat de vérification du module de batterie indique que le module de batterie présente un défaut, déplacer le module de batterie dans le dispositif porteur (33), dans lequel le résultat de vérification du module de batterie est déterminé sur la base de l'image du module de batterie, et le défaut comprend une plaque d'extrémité cible du module de batterie assemblée de manière incorrecte,
dans lequel l'image du module de batterie comprend une seconde image d'une plaque d'extrémité cible du module de batterie ; et
la détermination (S12) d'un résultat de vérification du module de batterie sur la base de l'image du module de batterie comprend :
déterminer un second résultat de vérification de la plaque d'extrémité cible sur la base de la seconde image de la plaque d'extrémité cible ; et déterminer le résultat de vérification du module de batterie sur la base du second résultat de vérification de la plaque d'extrémité cible ;
dans lequel la détermination d'un second résultat de vérification de la plaque d'extrémité cible sur la base de la seconde image de la plaque d'extrémité cible comprend :
reconnaître la seconde image de la plaque d'extrémité cible, pour obtenir des informations sur la plaque d'extrémité cible ; et
vérifier les informations sur la plaque d'extrémité cible, pour obtenir le second résultat de vérification de la plaque d'extrémité cible.

10. Dispositif de vérification (30) selon la revendication 9, dans lequel le défaut comprend une cellule de batterie défectueuse présente dans le module de batterie, et l'image du module de batterie comprend une première image d'une cellule de batterie cible dans le module de batterie ; et
la détermination (S12) d'un résultat de vérification du module de batterie sur la base de l'image du module de batterie comprend :
déterminer un premier résultat de vérification de la cellule de batterie cible sur la base de la première image de la cellule de batterie cible ; et déterminer le résultat de vérification du module de batterie sur la base du premier résultat de vérification de la cellule de batterie cible.

11. Dispositif de vérification (30) selon la revendication 9 ou 10, dans lequel le mécanisme de capture d'image (31) comprend un mécanisme à distance variable et un appareil de capture situé sur le mécanisme à distance variable, et un nombre d'axes du mécanisme à distance variable correspond à un nombre de caméras dans l'appareil de capture.

12. Dispositif de vérification (30) selon la revendication 9 ou 10, dans lequel l'image du module de batterie comprend une première image d'une cellule de batterie cible dans le module de batterie ; et
le mécanisme de capture d'image (31) est en outre configuré pour : capturer la première image de la cellule de batterie cible ; et envoyer la première image de la cellule de batterie cible à un appareil de commande prédéfini (34), de sorte que l'appareil de commande (34) détermine le résultat de vérification du module de batterie sur la base de la première image de la cellule de batterie cible.

13. Dispositif de vérification (30) selon la revendication 9 ou 10, dans lequel l'image du module de batterie comprend une seconde image de la plaque d'extrémité cible du module de batterie ; et
le mécanisme de capture d'image (31) est en outre configuré pour : capturer la seconde image de la plaque d'extrémité cible ; et envoyer la seconde image de la plaque d'extrémité cible à un appareil de commande prédéfini (34), de sorte que l'appareil de commande (34) détermine le résultat de vérification du module de batterie sur la base de la seconde image de la plaque d'extrémité cible.

14. Dispositif de vérification (30) selon l'une quelconque des revendications 9 à 13, dans lequel le dispositif de vérification (30) comprend en outre un dispositif de convoyage (36) ; et
le dispositif de convoyage (36) est configuré pour convoyer le module de batterie vers une première position spécifiée, dans lequel une direction dans laquelle le dispositif de convoyage (36) convoie le module de batterie est la même qu'une direction du dispositif d'évacuation (32), et la direction dans laquelle le dispositif de convoyage (36) convoie le module de batterie croise une direction du dispositif porteur (33).
